# EUROPÄISCHE PATENTSCHRIFT

(11) **EP 2 487 506 B1**
(45) Veröffentlichungstag und Bekanntmachung des Hinweises auf die Patenterteilung: **14.05.2014**
(21) Anmeldenummer: 12075015.3
(22) Anmeldetag: 10.02.2012
(51) Int. Cl.: G01S 19/23, G07B 15/00, G07B 15/06

(54) **Positionsbestimmungsvorrichtung sowie Verfahren und Computerprogrammprodukt zur Signalisierung einer Mangelnden Betriebsfähigkeit einer Positionsbestimmungsvorrichtung**
Positioning device, method and computer program product for signalling that a positioning device is not functioning as intended
Dispositif de détermination de position ainsi que procédé et produit de programme informatique pour la signalisation d'une capacité de fonctionnement manquante d'un dispositif de détermination de position

(30) Priorität: 10.02.2011 DE 102011011046
(43) Veröffentlichungstag der Anmeldung: 15.08.2012
(73) Patentinhaber: Toll Collect GmbH, 10785 Berlin (DE)
(72) Erfinder: Tuchscheerer, Wolfram, 12683 Berlin (DE) (DE)

(56) Entgegenhaltungen:
- EP-A1- 2 244 230
- EP-A2- 2 063 397
- WO-A2-03/038762
- WO-A2-2009/090515
- US-A1- 2002 032 506
- US-A1- 2009 157 566
- US-A1- 2010 164 787

## Beschreibung

Die Erfindung betrifft eine Positionsbestimmungsvorrichtung - insbesondere ein Gebührenerhebungsgerät, dessen Gebührenerhebung die Bestimmung der Position des Gebührenerhebungsgerätes voraussetzt-, ein Verfahren zur Signalisierung einer mangelnden Betriebsfähigkeit einer Positionsbestimmungsvorrichtung sowie ein Computerprogrammprodukt zur Signalisierung einer mangelnden Betriebsfähigkeit einer Positionsbestimmungsvorrichtung.

Mautsysteme als ein Beispiel von Gebührenerhebungssystemen sind zur Erhebung von Maut auf die Erfassung der Position von mautpflichtigen Fahrzeugen in einem Bereich angewiesen, der maßgeblich für die Nutzung der mautpflichtigen Straße ist.

Zur Vermeidung der Installation straßenseitiger Installationen zur Gebührenerhebung haben sich fahrzeugseitige Gebührenerhebungsgeräte (Mautgeräte, in Deutschland bekannt als OBUs (On-Board Units) oder einfach: Fahrzeuggeräte) bewährt, die zur Positionserfassung eine Positionsbestimmungsvorrichtung aufweisen oder datentechnisch an eine solche, die - ebenfalls fahrzeugseitig - mitgeführt wird, gekoppelt sind.

Eine hochgenaue Positionsbestimmung ist mit einer Positionsbestimmungsvorrichtung möglich, die einen GNSS-Empfänger aufweist. Ein GNSS-Empfänger empfängt spezifische Signale von Satelliten eines Globalen Navigationssatellⁱtensystems (engl. Global Navigation Satellite System, GNSS), die im Erdorbit stationiert sind, und verwendet diese zur Berechnung seiner eigenen Position. Vertreter dieser GNS-Systeme sind das amerikanische GPS (ehem. NAVSTAR), das russische GLONASS, das europäische GALILEO und das chinesische COMPASS, von denen die letzten drei noch im Aufbau begriffen sind.

Für grundlegende Informationen zu GNSS wird auf die Fachliteratur verwiesen (siehe beispielsweise Mansfeld: "Satellitenordnung und Navigation", Vieweg, ISBN 3-528-06886-8 (1998)).

Aus der Bedienungsanleitung für das Grundig-Fahrzeuggerät des deutschen Mautbetreibers Toll Collect GmbH ist bekannt (Ausgabe vom 18.03.2005, Seite 28), dass ein Signalisierungsmittel des Mautgerätes eine mangelnde Betriebsfähigkeit des GNSS-Empfängers mit der Meldung "GPS-Empfang gestört" signalisiert. Zusätzlich signalisiert eine rot leuchtende LED, dass die Erhebungsfunktion des Mautgerätes deaktiviert wurde. Eine Reaktivierung der Erhebungsfunktion kann in der Regel nur durch Reparatur an einer Service-Stelle durchgeführt werden, wobei auch geprüft wird, ob der GNSS-Empfänger beispielsweise tatsächlich defekt ist und ausgetauscht werden muss. Eine mangelnde Betriebsfähigkeit der Positionsbestimmungsvorrichtung ist nämlich nur wirklich gegeben, wenn ein innerer Defekt des GNSS-Empfängers vorliegt - beispielsweise eine defekte GNSS-Antenne - , oder ein innerer Defekt durch äußere Begleitumstände, die mit dem Fahrzeug oder vom Fahrzeug mitgeführten Gegenständen oder Einrichtungen zusammenhängen, oder von einer Satelliten-Fehlfunktion simuliert ist.

Für den mautpflichtigen Nutzer ergibt sich damit der zeit- und wegaufwändige Nachteil der pflichtgemäßen Inanspruchnahme der Dienstleistung einer Service-Stelle, die eigentlich unnötig ist, wenn sich herausstellt, dass der GNSS-Empfang nur vorübergehend gestört war - beispielsweise wegen Abschattung der Satelliten bei der Fahrt durch topographisch, architektonisch oder vegetationsbedingt für den Signalempfang nachteilige Gegenden, beispielsweise Schluchten, Tunnel oder Wälder.

Dennoch ist eine Signalisierung eines permanent gestörten GNSS gegenüber dem Nutzer unerlässlich, weil die Mauterhebung auf der Positionsbestimmung mittels GNSS beruht und eine wegen eines GNSS-Empfänger-Defektes ausbleibende Mauterhebung den Nutzer als Mautpreller einordnet.

Es ist daher eine erste Aufgabe der Erfindung eine technische Lösung bereitstellen, mit der bei einer Positionsbestimmungsvomchtung mit einer erhöhten Sicherheit und Zuverlässigkeit eine permanente GNSS-Störung von einer vorübergehenden unterschieden werden kann.

Aus dem Stand der Technik ist in Bezug auf die Problematik der Positionsbestimmung bei unzureichendem GPS-Empfang eine Reihe an Veröffentlichungen bekannt:
US 6 070124 A, US 2002 0 067 291 A1, US 6 904 362 B2, US 2005 0 216187 A1, US 2008 0 183 381 A1, WO 2004 025 573 A1, DE 101 04 499 A1, US 2005 0 064 877 A1, JP 11 183 589 A, DE 102 36 475 A1, DE 10 2004 002 584 A1, DE 102 36 475 A1, DE 10 2005 007 309 A1, DE 10 2005 008 360 A1 DE 101 26 345 A1, DE 10 2007 050 677 A1, DE 10 2007 051998 A1, DE 10 2008 028 746 A1, DE 10 2009 002 385 A1, DE 11 2005 000 048 T5, DE 11 2007 003 067 T5 und DE 11 2008 003 588 T5.

So ist zum Beispiel gemäß der DE 101 04 499 A1 vorgesehen, an Orten, an denen die Positionsbestimmung mittels GNSS und Koppelnavigation bekanntermaßen erschwert ist, Stützbaken zur Unterstützung der Positionsbestimmung einzusetzen. Das Mautsystem der DE 101 04 499 A1 weist außerdem ein Mobilfunksystem zur Kommunikation zwischen einem Fahrzeuggerät und zentralen Komponenten auf.

Aus der US 2005 0 064 877 A1 ist bekannt, alternative Möglichkeiten zu einer Positionsbestimmung mittels eines GNSS-Empfängers, heranzuziehen, falls die für in einem ersten Positionsbestimmungsversuch von dem GNSS-Empfänger bereitgestellten Positionsdaten nicht ausreichend genau sind. In diesem Fall ist vorgesehen, dass ein zweite Positionsbestimmung mittels eines Mobilfunk-Empfängers erfolgt. Liefert auch dieser keine hinreichend genaue Position, so ist eine dritte Positionsbestimmung mittels der von einem Zugangspunkt eines drahtlosen Netzwerkes übermittelten Daten vorgesehen.

Aus der JP 11 183 589 A ist bekannt, bei ausbleibendem GPS-Signalempfang eines mobilen Gerätes dann ein Fehler-wamsignal auszugeben, wenn entweder der Empfang von Positionsfehlerkorrekturdaten einer Rundfunk-Sendestation ausbleibt oder sich das mobile Gerät nicht in einem Tunnel befindet. Die Beschreibung von Maßnahmen zur Bestimmung der Anwesenheit des mobilen Gerätes in einem Tunnel bleibt diese Offenlegungsschrift allerdings schuldig.

Aus der US 2010 0 287 038 A1 und der ihr zugrunde liegenden WO 2009 090 515 A2 die zur Abgrenzung in der zweiteiligen Form verwendet wird, ist darüber hinaus bekannt, die von einem GNSS-Empfänger bereitgestellten Positionsdaten durch Positionsdaten zu validieren, die zusätzlich von einem Mobilfunk-Empfänger ermittelt werden. Ist die Abweichung zwischen den Positionsdaten der beiden unterschiedlichen Informationsquellen größer als ein vorgegebener Grenzwert, so wird ein entsprechendes Signal erzeugt.

Es ist ferner bekannt, die Positionsbestimmung bei unzureichendem GNSS-Empfang durch ein sogenanntes "dead-reckoning"-Verfahren durch Verarbeitung von Fahrdaten des Fahrzeugs fortzuführen. Dabei wird die letzte mit dem GNSS-Empfänger sicher ermittelte Position als Ausgangspunkt für eine Verfolgung der Fahrzeugposition mit der Betragsinformation eines Weggebers des Fahrzeugs (beispielsweise durch Abgriff am Tachometer) und der Winkelinformation eines Richtungsgebers des Fahrzeugs (beispielsweise durch Abgriff an einem Gyroskop) gekoppelt. Eine Zielführung des Fahrzeugs erfolgt damit sozusagen in "blinder" Navigation. Die wechselseitige Korrektur von aus fahrzeugunabhängigen GNSS-Signalen bestimmten absoluten Positionen mit denen aus den Fahrdaten der fahrzeugabhängigen Sensorik bestimmten relativen Positionen zur Zielführung eines Fahrzeugs wird auch als Koppelnavigation bezeichnet. Mit diesem Verfahren kann man zwar einen unzureichenden GNSS-Empfang in einer Blindregion zeitweilig überbrücken, jedoch zunächst keine Entscheidung über die mangelnde Betriebsfähigkeit der Positionsbestimmungsvorrichtung treffen. Letzteres wäre über den Umweg der Verwendung zusätzlicher Informationen möglich, indem die Blindregionen bekannter Abschattungen in einer elektronischen Karte hinterlegt werden und bei unzureichendem GNSS-Empfang ständig mit den aus der Blindnavigation mittels der fahrzeuggebundenen Sensordaten bestimmten Position daraufhin verglichen werden, ob sich das Fahrzeug in diesen Blindregionen befindet oder nicht. Ergibt sich, dass sich das Fahrzeug außerhalb einer Blindregion befindet, so deutet dies bei unzureichendem GNSS-Empfang daraufhin, dass die Positionsbestimmungsvorrichtung tatsächlich nicht betriebsfähig ist.

Dieses Verfahren besitzt drei gravierende Nachteile, die sich aus der Verfügbarkeit der für sein Durchführen nötigen Informationen ergeben:
Zum einen sind aktuelle und gesicherte Daten der Blindregionen als geographische Daten, beispielsweise in Form einer elektronischen Karte, in einem Datenspeicher der Positionsbestimmungsvorrichtung zu implementieren. Man ist also darauf angewiesen, ständig mit gültiger Information zu Blindregionen versorgt zu werden, was einen technischen Idealzustand darstellt, der nur mit hohem logistischen Aufwand gewährleistbar ist.

Zum anderen ist zur Durchführung dieses Verfahrens die Verfügbarkeit von fahrzeugabhängigen Fahrdaten unerlässlich, weil ansonsten unbekannt bleibt, wie lange sich das Fahrzeug in der Blindregion aufhält. Damit ist eine Daten-Schnittstelle der Positionsbestimmungsvorrichtung zum Fahrzeug nötig, deren Einrichtung - sofern das Positionsbestimmungsvorrichtung als Gebührenerhebungsgerät ausgebildet ist - der zuvor genannten Service-Stelle oder dem Nutzer obliegt, was die Flexibilität der wechselnden Verwendung der Positionsbestimmungsvorrichtung in verschiedenen Fahrzeugen stark einschränkt oder dem Nutzer eine unangemessene Mitwirkung für das Funktionieren des Mautgerätes überträgt.

Drittens ist sowohl das Vorsehen eines Gyroskops als auch der entsprechenden Schnittstellen mit Materialkosten und hohem Abstimmungsbedarf bei der Auslegung der Schnittstellen und der Definition der Kommunikationsprotokolle zwischen Positionsbestimmungsvorrichtung und Fahrzeug-Sensorik gegenüber einer hohen Anzahl von verschiedenen Tachometern und Gyroskopen in verschiedenen Fahrzeugen verbunden.

Es ist daher die zweite Aufgabe der Erfindung, diese zwei zuletzt genannten Nachteile zu beseitigen, indem sie ein Erzeugnis und ein Verfahren bereitstellt, mit denen fahrzeugunabhängig über die mangelnde Betriebsfähigkeit einer Positionsbestimmungsvorrichtung entschieden werden kann.

Es ist in Bezug auf den ersten genannten Nachteil der benötigten geographischen Daten ferner die dritte Aufgabe der Erfindung, ein Erzeugnis und ein Verfahren bereitzustellen, die nicht auf derartige Informationen über Gebiete mit unzureichendem GNSS-Empfang angewiesen sind, um über die mangelnde Betriebsfähigkeit einer Positionsbestimmungsvorrichtung entscheiden zu können.

Die der Erfindung zugrunde liegenden Aufgaben werden gelöst durch eine Positionsbestimmungsvorrichtung - insbesondere ein Gebührenerhebungsgerät, dessen Gebührenerhebung die Bestimmung der Position des Gebührenerhebungsgerätes voraussetzt -, durch ein Verfahren zur Signalisierung einer mangelnden Betriebsfähigkeit einer Positionsbestimmungsvorrichtung und durch ein Computerprogrammprodukt zur Signalisierung einer mangelnden Betriebsfähigkeit einer Positionsbestimmungsvorrichtung, jeweils nach einem entsprechenden der unabhängigen Ansprüche.

Bevorzugte Ausführungen der Erfindung und Verwendungen sind Gegenstand der abhängigen Ansprüche.

Die Erfindung weist demzufolge mehrere Aspekte auf, die durch die verschiedenen Kategorien der Erfindung repräsentiert sind. Unter einem Aspekt der Erfindung nachfolgend erwähnte Vorteile, Merkmale und Ausführungsformen gelten dabei als übertragbar auf alle anderen Aspekte der Erfindung, soweit dies nicht zu einem Widerspruch führt.

Der Kern der Erfindung liegt darin, zur Signalisierung einer mangelnden Betriebsfähigkeit einer mit einem GNSS-Empfänger und einem Mobilfunkempfänger ausgerüsteten Positionsbestimmungsvorrichtung eine Entscheidung vorzusehen, die sowohl auf der Positionsbestimmungsqualität des GNSS-Empfangs des GNSS-Empfängers als auch auf mehreren Erfassungen der Mobilfunk-Empfangscharakteristik des Mobilfunk-Empfangs des Mobilfunkempfängers beruht.

Eine solche Entscheidung kann durch die Registrierung eines unzureichenden GNSS-Empfangs des GNSS-Empfängers und durch die Feststellung eines regulären Mobilfunk-Empfangs des Mobilfunkempfängers bedingt werden und durch ein Signalisierungsmittel einer von der Positionsbestimmungsvorrichtung umfassten Signalisierungsvorrichtung signalisiert werden.

Die Erfindung liefert damit einen Beitrag zum Stand der Technik, der darauf beruht, dass mehrere erfasste Mobilfunk-Empfangscharakteristiken zur Entscheidung über eine mangelnde Betriebsfähigkeit einer Vorrichtung zur Positionsbestimmung mittels GNSS herangezogen werden.

Die erfindungsgemäße Verwendung des Mobilfunkempfängers zur Entscheidungsfindung über eine mögliche mangelnde Betriebsfähigkeit der Positionsbestimmungsvorrichtung bei unzureichendem GNSS-Empfang bietet zahlreiche Vorteile:
Mit der Erfindung ist es vorteilhaft möglich, mit erhöhter Zuverlässigkeit eine Aussage über eine mangelnde Betriebsfähigkeit einer mit einem GNSS-Empfänger ausgerüsteten Positionsbestimmungsvorrichtung zu treffen, indem eine - eine Signalisierung erfordernde - permanente GNSS-Störung von einer vorübergehenden GNSS-Störung, die nicht signalisiert zu werden braucht, unter Einbeziehung der Empfangsinformation eines zweiten Empfängers, der nicht auf GNSS beruht, unterschieden wird. Die Erfindung gewährleistet mit erhöhter Sicherheit, dass das Ergebnis einer mangelnden Betriebsfähigkeit einer Positionsbestimmungsvorrichtung, deren Positionsbestimmung auf dem Empfang von GNSS-Daten beruht, gerechtfertigt zu einer Signalisierung gebracht wird.

Da die Erfindung nur Mittel, die der Positionsbestimmungsvorrichtung und nicht dem die Positionsbestimmungsvorrichtung mitführenden Objekt (beispielsweise einem Fahrzeug) zuzuordnen sind, zur Entscheidungsfindung über die Signalisierung einer mangelnden Betriebsfähigkeit verwendet, ist die Positionsbestimmungsvorrichtung bei Einsatz in einem Fahrzeug hinsichtlich seiner Entscheidungsfindung vorteilhaft unabhängig von einer Verwendung von Fahrdaten des Fahrzeugs. Damit kann auf eine datentechnische Kopplung an fahrzeugspezifischen Messeinrichtungen, die Auskunft über die Geschwindigkeit und Fahrtrichtung des Fahrzeugs geben, gänzlich verzichtet werden. Wenn die Positionsbestimmung auf Gebiete mit hinreichendem GNSS-Empfang beschränkt ist, kann auf diese Elemente der Blind- oder Koppelnavigation sogar, zumindest für eine erfindungsgegenständliche Gebührenerhebung, - mit entsprechenden Kostenvorteilen - gänzlich verzichtet werden. Folglich können mit der Erfindung vorteilhaft im Vergleich mit herkömmlichen Gebührenerhebungsvorrichtungen vereinfachte, kostengünstige und einfach zu installierende Gebührenerhebungsvorrichtungen bereitgestellt werden.

Ferner ist kein Zugriff auf geographische Daten, die bekanntlich von möglicherweise mangelnder Aktualität sein können, zur Ermittlung darüber nötig, ob das Fahrzeug in eine Blindregion eingefahren sein könnte, in der der GNSS-Empfang gestört sein kann. Mit der erfindungsgemäßen Lösung wird diese wichtige Information in Echtzeit beispielsweise aus Erfassungen der Mobilfunk-Empfangscharakteristik extrahiert. Deswegen bietet die Erfindung eine gegenüber der Verwendung von Kartendaten eines gewissen Alters und einer gewissen Unvollständigkeit mit der Verwendung von Mobilfunk-Daten, die aus den aktuellen Umgebungsbedingungen ermittelbar sind, eine vorteilhafte einfache Lösung, die - im Gegensatz zu Kartendaten - keinen Aktualisierungsbedarf kennt.

Nicht einmal Ortsinformationen über die Zellen des Mobilfunknetzes, die die Kommunikationskanäle bedienen, sind zur Ausführung der Erfindung vonnöten, die erfindungsgemäß allein mit den erfassten Mobilfunk-Empfangscharakteristiken auskommt, welche eine erste Signalstärke eines ersten Kommunikationskanals und eine zweite Signalstärke wenigstens eines zweiten Kommunikationskanals umfassen können und/ oder auf die Signalstärken eines Kommunikationskanals oder mehrerer Kommunikationskanäle beschränkt sein können.

Das ist ein gravierender Vorteil der Erfindung, weil es extrem aufwändig ist, die zur Positionsbestimmung notwendigen Ortsinformationen zu den Zellinformation der empfangenen Basisstationen - insbesondere verschiedener Mobilfunknetze - stets aktuell und korrekt verfügbar zu halten.

Stattdessen folgt erfindungsgemäß aus einer Analyse mehrerer Mobilfunk-Empfangscharakteristiken, die einen (teilweisen) Ausfall oder Qualitätsverlust des GNSS-Empfangs begleiten, dass bei keiner oder nur einer geringfügigen Änderung der Mobilfunk-Empfangscharakteristik im Rahmen einer vorgebbaren maximalen Änderungsschwelle der Mobilfunk-Empfangscharakteristik eine mangelnde Betriebsfähigkeit der Positionsbestimmungsvorrichtung vorliegt. Kurz: das Feststellen eines regulären Mobilfunk-Empfangs wird bei mangelndem GNSS-Empfang als Indiz für ein Versagen des GNSS-Empfängers gewertet. Da der GNSS-Empfänger auf den Empfang von Satellitensignalen angewiesen ist, umfasst ein Defekt des GNSS-Empfängers auch den Ausfall eines oder mehrerer Satelliten.

Gemäß einem ersten Aspekt der Erfindung weist eine erfindungsgemäße Positionsbestimmungsvorrichtung zusätzlich zu den im Oberbegriff ihres unabhängigen Anspruches genannten Komponenten - wenigstens ein GNSS-Empfänger und wenigstens eine Signalisierungsvorrichtung mit wenigstens einem ersten Signalisierungsmittel zum Signalisieren einer mangelnden Betriebsfähigkeit des GNSS-Empfängers - wenigstens einen Mobilfunkempfänger, und wenigstens ein Entscheidungsmittel zum Entscheiden über eine Aktivierung des ersten Signalisierungsmittels in Abhängigkeit von wenigstens einer Positionsbestimmungsqualität des GNSS-Empfangs des GNSS-Empfängers (GE) und in Abhängigkeit von einer ersten und wenigstens einer zweiten Mobilfunk-Empfangscharakteristik des Mobilfunk-Empfangs des Mobilfunkempfängers (ME) auf.

Insbesondere können mit einer ersten und wenigstens einer zweiten Mobilfunk-Empfangscharakteristik eine erste Erfassung und wenigstens eine zweite Erfassung der kontinuierlich bestehenden Mobilfunk-Empfangscharakteristik gemeint sein, die zeitlich nacheinander erfolgen.

Die Erfindung sieht folglich vor, dass sowohl Daten, die eine Posidonsbesämmungsqualität repräsentieren als Daten, die Mobilfunk-Empfangscharakteristiken repräsentieren, in die Entscheidung des Entscheidungsmittels einfließen, sprich: vom Entscheidungsmittel verarbeitet werden.

Unter einer Positionsbestimmungsqualität wird allgemein jede Information verstanden, die geeignet ist, die Qualität der bestimmten Position - sofern eine solche vom GNSS-Empfänger ausgegeben wird - zu charakterisieren, oder - sofern keine Position vom GNSS-Empfänger ausgegeben wird - den Umstand mangelnder Positionsbestimmung anzuzeigen. Zur Positionsbestimmungsqualität zählt auch die Berücksichtigung möglicher Störsignale, soweit sie detektiert werden können.

Bevorzugt ist eine Positionsbestimmungsqualität durch wenigstens einen Parameter oder Daten eines Datensatzes charakterisiert, die ein Maß für eine Positionsbestimmungsqualität, sprich: einer Güte, einer bestimmten Position repräsentierten oder - alternativ dazu - eine mangelnde Positionsbestimmungsmöglichkeit repräsentieren.

Unter einer Mobilfunk-Empfangscharakteristik wird allgemeine jede Information verstanden, die geeignet ist, das Spektrum an physikalischen Parametern aller möglichen Empfangskanäle - sprich: Sendefrequenzen - nicht nur eines, sondern prinzipiell jedes verfügbaren Mobilfunknetzes, zu beschreiben.

Bevorzugt ist eine Mobilfunk-Empfangscharakteristik durch wenigstens einen Parameter oder Daten eines Datensatzes charakterisiert, die ein Maß für eine Mobilfunk-Empfangscharakteristik, insbesondere von Signalstärkent -pegeln detektierbarer Kommunikations-/ Frequenzkanäle, repräsentieren oder - alternativ dazu - einen mangelnden Mobilfunk-Empfang repräsentieren.

In bevorzugten Ausführungsformen der Erfindung ist die Positionsbestimmungsvorrichtung gekennzeichnet durch wenigstens ein Registrierungsmittel zum Registrieren eines unzureichenden GNSS-Empfangs des GNSS-Empfängers in Abhängigkeit von der wenigstens einen Positionsbestimmungsqualität des GNSS-Empfangs des GNSS-Empfängers, und wenigstens ein Feststellungsmittel zum Feststellen eines regulären Mobilfunk-Empfangs des Mobilfunkempfängers in Abhängigkeit von der ersten und wenigstens der zweiten Mobilfunk-Empfangscharakteristik des Mobilfunk-Empfangs des Mobilfunkempfängers, wobei das Entscheidungsmittel zum Entscheiden über eine Aktivierung des ersten Signalisierungsmittels oder zum Entscheiden über eine Wiedergabe seiner Entscheidung mittels des ersten Signalisierungsmittels in Abhängigkeit von dem Feststellungsergebnis des Feststellungsmittels und in Abhängigkeit von dem Registrierungsergebnis des Registrierungsmittels ausgebildet ist.

Damit wird eine erfindungsgemäße Positionsbestimmungsvorrichtung bereitgestellt, die wenigstens einen GNSS-Empfänger, wenigstens ein Registrierungsmittel, zum Registrieren eines unzureichenden GNSS-Empfangs des GNSS-Empfängers und wenigstens eine Signalisierungsvorrichtung mit wenigstens einem ersten Signalisierungsmittel zum Signalisieren einer mangelnden Betriebsfähigkeit des GNSS-Empfängers aufweist und gekennzeichnet ist durch wenigstens einen Mobilfunkempfänger, wenigstens ein Feststellungsmittel zum Feststellen eines regulären Mobilfunk-Empfangs des Mobilfunkempfängers, sowie durch wenigstens ein Entscheidungsmittel zum Entscheiden über eine Aktivierung des ersten Signalisierungsmittels oder zum Entscheiden über eine Wiedergabe seiner Entscheidung mittels des ersten Signalisierungsmittels in Abhängigkeit von dem Feststellungsergebnis des Feststellungsmittels und in Abhängigkeit von dem Registrierungsergebnis des Registrierungsmittels.

Damit wird eine besonders einfache Möglichkeit geschaffen, im Bedarfsfall zur Signalisierung zu kommen, weil die Entscheidung zur Signalisierung auf voneinander getrennten, unabhängigen Entscheidungen der Registrierung eines unzureichenden GNSS-Empfangs und der Feststellung eines regulären Mobilfunk-Empfangs aufsetzt.

Das Registrieren besteht dabei im Allgemeinen in der Erfassung und ergebniserzeugenden Auswertung von einem oder mehreren Datensätzen, die - beispielsweise gemäß des Standards NMEA-0183 (NMEA = National Marine Electronics Association) - von einem GNSS-Empfänger ausgegeben werden. Die diskutierten Datensätze beziehen sich auf den Standard NME-0183 für einen GPS-Empfänger, wobei jeder GNSS-Empfänger prinzipiell weniger oder mehr Daten nach einem herstellereigenen Standard ausgeben kann.

Im einfachsten Fall wird nur ausgewertet, ob der GNSS-Empfänger überhaupt Daten ausgibt. Gibt er über einen festgelegten Zeitraum keine Daten aus, so wird dieser Umstand als unzureichender GNSS-Empfang registriert. Ein solcher Fall kann beispielsweise vorliegen, wenn der GNSS-Empfänger defekt ist oder nicht eingeschaltet ist.

Werden vom Registrierungsmittel ein oder mehrere Datensätze eines als GPS-Empfänger ausgebildeten GNSS-Empfängers empfangen, so kann der Empfang der Angabe im Datensatz GGA (Global Positioning System Fix Data) des Datenfeldes "GPS-Qualität" von Q = 0, die eine ungültige Positionsbestimmung bezeichnet, über einen festgelegten Zeitraum ausreichen, um einen unzureichenden GNSS-Empfang zu registrieren. Das gleiche gilt für den Empfang der Angabe im Datensatz RMC (Recommended Minimum sentence C) des Datenfeldes "Signalintegrität" von F = N (data Not valid) und/ oder des Datenfeldes "Status" A = V (Void).

Ist im GGA-Datensatz Q = 1 (gültige GPS-Position) oder Q = 2 (gültige DGPS-Position) oder im RMC-Datensatz F = A (Autonomous mode) oder F = D (Differential Mode), so wird eine Position ausgegeben, die definiert ist durch ihre Breite in Grad und Bogenminuten sowie Richtung (Nord oder Süd), ihre Länge in Grad und Bogenminuten sowie Richtung (Ost oder West) und gegebenenfalls eine Höhenangabe in Metern über Normalnull. Für eine zweidimensionale Positionsbestimmung in der Horizontalebene in Breite und Länge sind die Daten wenigstens dreier Satelliten nötig. Für eine dreidimensionale Positionsbestimmung in Breite, Länge und Höhe sind die Daten von wenigstens vier Satelliten nötig.

Die Angabe dieser Position ist mehr oder weniger fehlerbehaflet je nachdem welche Daten von wie vielen Satelliten in die vom GPS-Empfänger durchgeführte Positionsbestimmung eingehen. Die Information darüber, welche Satelliten (und damit wie viele) zur Positionsbestimmung verwendet werden, wird mit dem Datensatz GSA (GPS Satellites Active) von dem GPS-Empfänger bereitgestellt.

Information darüber, wie viele Satelliten überhaupt sichtbar sind, wird mit dem Datensatz GSV (GPS Satellites in View) bereitgestellt. Sind für den GPS-Empfänger nur zwei Satelliten insofern sichtbar, als dass er Signale von ihnen empfangen kann, so ist keine Positionsbestimmung möglich und es erfolgt eine Ausgabe Q = 0 oder A = V, was das Registrierungsmittel dazu veranlasst, einen unzureichenden Empfang festzustellen.

Sind drei oder mehr Satelliten sichtbar, so wird eine gültige Position ausgegeben, die durch verschiedene Positions-beslimmungsqualitäts-Parameter gekennzeichnet ist. Ein solcher Parameter ist der geometrisch bedingte Ortungsfehler (engl. DOP = Dilution Of Precision), der beispielsweise für die zweidimensionale Positionsbestimmung durch den Wert des HDOP (Horizontal Dilution of Precision) im Datensatz GGA oder GSA gegeben ist. Der beste Wert ist HDOP = 1,0. Verschlechterungen äußern sich in einer Erhöhung des HDOP-Wertes. Das Registrierungsmittel damit kann beispielsweise selbst unter Ausgabe einer gültigen Position bei Überschreiten eines HDOP-Wertes von 3,0 einen unzureichenden GPS-Empfang registrieren.

Unter einem regulären Mobilfunk-Empfang wird im Sinne der Erfindung jeder Mobilfunk-Empfang verstanden, der sich von einem irregulären Mobilfunk-Empfang aufgrund seiner Mobilfunk-Empfangscharakteristik unterscheidet. Ein diesbezügliches Unterscheidungskriterium oder mehrere diesbezügliche in vorgebbarer Kombination aufstellbare Unterscheidungskriterien können bezüglich einer oder mehrerer Erfassungen der Mobilfunk-Empfangschararakteristik des Mobilfunk-Empfangs sowohl orts- und zeitunabhängig als auch ortsabhängig und/ oder zeitabhängig definiert sein.

Das Feststellen eines regulären Mobilfunk-Empfangs entspricht vorzugsweise der Übereinstimmung mit einem Kriterium, das einem ungehinderten Mobilfunk-Empfang auf freiem Feld entspricht.

Das Feststellen eines irregulären Mobilfunk-Empfangs entspricht vorzugsweise der Übereinstimmung mit einem Kriterium, das einem fehlenden und/ oder gegenüber dem regulären Mobilfunk-Empfang reduzierten Mobilfunk-Empfang entspricht.

Die Aktivierung des ersten Signalisierungsmittels kann das Auslösen eines binären Signals durch Wechsel von einer 0-stellung in eine 1-Stellung beinhalten und/ oder eine Wiedergabe der Entscheidung des Entscheidungsmittels mittels des ersten Signalisierungsmittels, beispielsweise in Textform.

In bevorzugten Ausführungsformen der Erfindung kann das Signalisierungsmittel als ein Leuchtmittel ausgebildet sein, beispielsweise als eine LED (LED = Light Emitting Diode) oder ein dem Leuchtzweck einer LED entsprechenden anderen Leuchtmittel.

Dies ist jedoch nicht zwingend. Unter einem Signalisierungsmittel ist generell ein jedes Mittel zu verstehen, das unter der entsprechenden Aktivierung ein Signal erzeugt, das optisch, elektrisch, magnetisch, elektromagnetisch, akustisch, mechanisch, chemisch und so weiter sein kann.

Vorzugsweise ist die Signalisierung für einen Menschen wahrnehmbar.

In bevorzugten Ausführungsformen der Erfindung entspricht die Aktivierung des ersten Signalisierungsmittels dem Einschalten eines ausgeschalteten Signalisierungsmittels. In weniger bevorzugten Ausführungsformen der Erfindung entspricht die Aktivierung des ersten Signalisierungsmittels dem Ausschalten eines eingeschalteten Signalisierungsmittels. In bevorzugten Ausführungsformen der Erfindung kann das Signalisierungsmittel zur Wiedergabe der Entscheidung als eine optische Anzeigeeinrichtung ausgebildet sein, beispielsweise als eine LCD-Anzeige oder einer dem Anzeigezweck einer LCD-Anzeige (LCD = Liquid Crystal Display) entsprechenden anderen Anzeige.

In bevorzugten Ausführungsformen der Erfindung wird die Wiedergabe der Entscheidung durch eine entsprechende Textnachricht mittels des Signalisierungsmittels dargestellt.

Bevorzugte Ausführungsformen der Erfindung sehen vor, die Signalisierungsvorrichtung einer derartigen Positionsbestimmungsvorrichtung mit einem weiteren Signalisierungsmittel oder mehreren weiteren Signalisierungsmitteln zu versehen, wobei das Entscheidungsmittel zum Entscheiden über eine Aktivierung des oder der weiteren Signalisierungsmittel oder zum Entscheiden über eine Wiedergabe seiner Entscheidung mittels des oder der weiteren Signalisierungsmittels in Abhängigkeit von dem Feststellungsergebnis des Feststellungsmittels und in Abhängigkeit von dem Registrierungsergebnis des Registrierungsmittels ausgebildet ist.

In bevorzugten Ausführungsformen der Erfindung sind sowohl ein als optische Anzeigeeinrichtung ausgebildetes Signalisierungsmittel zur Wiedergabe der Entscheidung als auch mehrere als Leuchtmittel ausgebildete Signalisierungsmittel vorgesehen.

Damit ist es vorteilhaft möglich, mehrere unterschiedliche Entscheidungen des Entscheidungsmittels anzuzeigen. Beispielsweise kann ein Zustand, in dem das Registrieren eines unzureichenden GNSS-Empfangs vorliegt und das Feststellen eines regulären Mobilfunk-Empfangs nicht oder noch nicht erfolgt ist, durch das Aktivieren eines zweiten Signalisierungsmittels (beispielsweise eine gelb leuchtende LED) und unter Wiedergabe einer Textnachricht über einen unzureichenden GNSS-Empfang mittels eines dritten als optische Anzeigeeinrichtung ausgebildeten Signalisierungsmittels signalisiert werden, während ein Zustand, in dem das Registrieren eines unzureichenden GNSS-Empfangs vorliegt und das Feststellen eines regulären Mobilfunk-Empfangs erfolgt ist, durch das Aktivieren des ersten Signalisierungsmittels (beispielsweise eine rot leuchtende LED) und unter Wiedergabe einer Textnachricht über eine mangelnde Betriebsfähigkeit der Positionsbestimmungsvorrichtung mittels des dritten Signalisierungsmittels signalisiert werden kann.

Bevorzugte Ausführungsformen der erfindungsgemäßen Positionsbestimmungsvorrichtung sind gekennzeichnet durch wenigstens ein Vergleichsmittel zum Ermitteln einer Änderung der Mobilfunk-Empfangscharakteristik durch Vergleich der ersten erfassten Mobilfunk-Empfangscharakteristik mit wenigstens der zweiten erfassten Mobilfunk-Empfangscharakteristik, wobei das Feststellungsmittel ausgebildet ist, einen regulären Mobilfunk-Empfang festzustellen, wenn die vom Vergleichsmittel ermittelte Änderung der Mobilfunk-Empfangscharakteristik wenigstens ein vorgebbares Mobilfunk-Empfangskriterium für regulären Mobilfunk-Empfang erfüllt, und wobei das Entscheidungsmittel zum Entscheiden über eine Aktivierung des ersten Signalisierungsmittels bei Feststellung eines regulären Mobilfunk-Empfangs des Mobilfunkempfängers durch das Feststellungsmittel und der Registrierung eines unzureichenden GNSS-Empfangs des GNSS-Empfängers durch Registrierungsmittels ausgebildet ist.

Damit ist vorteilhaft beschrieben, wie die Feststellung eines regulären Mobilfunk-Empfangs definiert ist, und dass das Vorliegen eines regulären Mobilfunk-Empfangs bei einer Registrierung eines unzureichenden GNSS-Empfangs dazu führt, dass eine Signalisierung einer mangelnden Betriebsfähigkeit des GNSS-Empfängers erfolgt.

Ein vorgebbares Mobilfunk-Empfangskriterium kann zum Beispiels lauten, dass die Änderung des Signalpegels eines ersten Kommunikationskanals der zweiten Mobilfunk-Empfangscharakteristik gegenüber demselben ersten Kommunikationskanal der ersten Mobilfunk-Empfangscharakteristik unterhalb eines vorgebbaren Schwellwertes liegt.

Zum Beispiel kann das Mobilfunk-Empfangskriterium für regulären Empfang lauten, dass das Verhältnis der Signalpegel eines Kommunikationskanals verschiedener Mobilfunk-Empfangscharakteristiken im Bereich eines Faktors zwischen 0,5 und 2 liegen muss.

Ein vorgebbares Mobilfunk-Empfangskriterium kann zum Beispiels lauten, dass sich die Signalpegel eines Kommunikationskanals einer ersten und einer zweiten Erfassungen der Mobilfunk-Empfangscharakteristik des Mobilfunkempfängers um nicht mehr als 10 dB unterscheiden.

Es können für verschiedene Kommunikationskanäle unterschiedliche maximale Signalpegelverhältnisse als Mobilfunk-Empfangskriterium vorgegebenen sein. Ferner kann festgelegt sein, dass es genügt wenn eine bestimmte Anzahl (beispielsweise ein, zwei oder drei) Kommunikationskanäle ein Kriterium oder mehrere Kriterien für den maximalen Pegelunterschied im Betrage und dem Vorzeichen nach erfüllen.

In qualitativer Hinsicht liegt ein regulärer Mobilfunk-Empfang immer dann vor, wenn sich die Mobilfunk-Empfangscharakteristik verbessert oder im Wesentlichen gleich bleibt; ein irregulärer Mobilfunk-Empfang liegt immer dann vor, wenn sich die Mobilfunk-Empfangscharakteristik verschlechtert. Diese qualitativen Unterscheidungsmerkmale zu quantifizieren, ist Aufgabe dem Mobilfunk-Empfangskriteriums, das im Übrigen auch von der Positionsbestimmungsqualität des GNSS-Signals (zum Beispiel seines HDOP-Wertes) abhängen kann, die als unzureichend registriert wurde.

Bevorzugte Ausführungsformen der Erfindung sehen vor, dass das Feststellungsmittel wenigstens ein Vergleichsmittel zum Entscheiden über eine Änderung einer Mobilfunk-Empfangscharakteristik anhand wenigstens eines Vergleichs mehrerer aufeinanderfolgender als M-Erfassungen bezeichneter Erfassungen von Mobilfunk-Empfangscharakteristiken aufweist.

Mit einem solchen Vergleichsmittel ist eine vorteilhafte Möglichkeit gegeben, das Feststellungsmittel mit den entscheidenden Informationen zu versorgen, die es für eine zuverlässige Feststellung über das Vorliegen eines regulären Mobilfunk-Empfangs benötigt.

Ein Beispiel für eine Mobilfunk-Empfangscharakteristik ist die Empfangsfeldstärke, die der Mobilfunkempfänger von der Sendestation empfängt.

Insbesondere ist der Mobilfunkempfänger vorzugsweise für den Mobilfunk-Empfang wenigstens eines zellulären Mobilfunknetzes mit einer Vielzahl an Basisstationen, beispielsweise eines GSM-Funknetzes (GSM = Global System for Mobile communication), vorgesehen.

Damit lässt sich als weiteres Beispiel für die Mobilfunk-Empfangscharakteristik die Anzahl der für eine Kommunikation verwendbaren oder detektierbaren Basisstationen (engl. BTS = Basis Transceiver Station) der Zellenumgebung (engl. CE = Cell Environment) angegeben. Komplexere Mobilfunk-Empfangscharakteristiken sind zusätzlich durch die Empfangsfeldstärken, Empfangsleistungen oder im technischen Sinne von Empfangspegeln der von den jeweiligen Basisstationen bereitgestellten Kommunikationskanäle am Ort des Mobilfunkempfängers gekennzeichnet. Eine M-Erfassung der Mobilfunk-Empfangscharakteristik besteht in diesem Fall im Messen und zumindest zeitweisen Speichern von Empfangspegeln (engl. RXLEV = Reception Level, Dimensionierung in dBm) von einem oder mehreren am Ort des Mobilfunkempfängers zur Verfügung stehenden Kommunikationskanälen, deren jeweilige Kanalnummem (engl. CHN = CHannel Number) jeweils Zellen zugeordnet sind, die durch eine eindeutige Globale Zellenidentifikation (engl. CGI = Cell Global Identification) gekennzeichnet sind.

Bevorzugte Ausführungsformen der Erfindung sehen vor, die Positionsbestimmungsvorrichtung mit wenigstens einem Blockiermittel zum Blockieren der abermaligen Verwendung des Entscheidungsmittels nach erstmaliger Aktivierung des ersten Signalisierungsmittels oder nach erstmaliger Wiedergabe der Entscheidung mittels des ersten Signalisierungsmittels zu versehen.

Damit wird vorteilhaft verhindert, dass eine einmal gerechtfertigterweise getroffene Entscheidung zur Signalisierung einer tatsächlichen mangelnden Betriebsfähigkeit durch Änderungen des GNSS-Empfangs und/ oder des Mobilfunk-Empfangs wieder aufgehoben wird. Damit wird die Verschleierung eines real aufgetretenen Fehlers vermieden, und es wird eine Reparatur der - wenn auch nur zeitweise - defekten oder nicht betriebsfähigen Positionsbestimmungsvorrichtung erzwungen.

Ein derartiges Blockiermittel kann auf verschiedenartige Weise wirken: Es kann beispielsweise einerseits Änderungen der Ergebnisse des Registriermittels und/ oder des Feststellungsmittels blockieren, indem ist direkt auf diese wirkt, und somit dafür sorgen, dass das Entscheidungsmittel keine veränderten Eingangsgrößen zur Ausgabe einer anderen Entscheidung erhält. Andererseits kann es direkt auf das Entscheidungsmittel wirken, indem es die Verarbeitung veränderter Eingangsgrößen durch das Entscheidungsmittel unterbindet.

Andere Arten und Weisen der Implementierung und/ oder Wirkung des Blockiermittels vorzusehen mit dem Ziel, eine einmal ausgelöste Signalisierung zu nicht annullieren, liegt im Bereich fachmännischen Handelns.

Bevorzugte Ausführungsformen der Erfindung sehen vor, von den vorstehend besagten Mitteln - nämlich dem Registrierungsmittel, dem Feststellungsmittel, dem Entscheidungsmittel sowie gegebenenfalls dem Vergleichsmittel und dem Blockiermittel - wenigstens das Entscheidungsmittel durch ein Computerprogrammprodukt in einem Speicher der Positionsbestimmungsvorrichtung zu repräsentieren, wobei das Computerprogrammprodukt mittels eines Prozessors der Positionsbestimmungsvorrichtung ausführbar ist.

Vorzugsweise werden alle vorstehend besagten Mittel, einschließlich gegebenenfalls vorliegendem Vergleichsmittel und/ oder gegebenenfalls vorliegendem Blockiermittel durch wenigstens ein Computerprogrammprodukt in einem Speicher der Positionsbestimmungsvorrichtung zu repräsentiert, wobei das Computerprogrammprodukt mittels eines Prozessors der Positionsbestimmungsvorrichtung ausführbar ist.

Vorzugsweise ist das Computerprogrammprodukt modular in Form mehrerer Programmmodule ausgebildet, denen jeweils eines der besagten Mittel zur Repräsentation zugeordnet ist.

Zu vorgenannten Ausführungsformen alternative oder zumindest teilweise optionale Ausführungsformen der Erfindung sehen vor, von den vorstehend besagten Mitteln - nämlich dem Registrierungsmittel, dem Feststellungsmittel, dem Entscheidungsmittel sowie gegebenenfalls dem Vergleichsmittel und dem Blockiermittel - wenigstens das Entscheidungsmittel durch eine elektrische Logik-Schaltung auszubilden. Ein solche Schaltung weist mehrere logische Eingänge auf, von denen ein erster zur Aufnahme von logischen Signalen des Registrierungsmittels (beispielsweise 0 oder 1) vorgesehen ist und ein zweiter zur Aufnahme von logischen Signalen des Feststellungsmittels (beispielsweise 0 oder 1) vorgesehen ist, sowie wenigstens einen logischen Ausgang zu Ausgabe eines logischen Signals - nämlich das erfindungsgemäße Signalisierungssignal an eine weitere Schaltung, über die beispielsweise das erste Signalisierungsmittel aktiviert wird. Diese Schaltungen sind vorzugsweise unter Beteiligung von Halbleiterverstärkem ausgebildet. Ferner kann das Signal des logischen Ausgangs der elektrischen Logik-Schaltung zusätzlich auf den logischen Eingang eines weiter oben aufgeführten Blockiermittels geführt werden.

Bevorzugte Ausführungsformen der Erfindung sehen vor, dass der Mobilfunkempfänger von einem Mobilfunkgerät umfasst ist, das außer dem Mobilfunkempfänger einen Mobilfunksender umfasst. Alternativ kann vorgesehen sein, dass der Mobilfunkempfänger als Mobilfunktransceiver eines Mobilfunkgerätes ausgebildet ist. Mit beiden Varianten wird es vorteilhaft möglich, den erfindungsgemäßen Mobilfunkempfänger auch zum Senden von einer oder mehrerer Nachrichten und zur Entgegennahme von einer oder mehrerer Nachrichten zu nutzen, wobei letztere insbesondere als Antwort von einer zentralen Stelle in Folge einer die mangelnde Betriebsfähigkeit betreffende Meldung generiert wurde, die vom Mobilfunkgerät an die zentrale Stelle gesendet wurden. Eine von der zentralen Stelle gesendete Nachricht kann Informationen bezüglich einer durchzuführenden Reparatur oder eines vorzunehmenden Austausches der fehlerbehafteten Positionsbestimmungsvorrichtung enthalten, die auf einem als optische Anzeigeeinrichtung ausgebildeten Signalisierungsmittel wiedergegeben werden können. Alternativ oder optional kann eine solche Nachricht ein der oder mehrere Fehlersuch- und/ oder Fehlerbehebungsmittel, zum Beispiel als entsprechende Computerprogramme ausgebildet, enthalten.

Ein solches Fehlerbehebungsmittel kann schließlich mit der Eigenschaft ausgestattet sein, das von einer bevorzugten Ausführungsform umfasste Blockiermittel zumindest vorübergehend zu deaktivieren, wenn mittels des Fehlerbehebungsmittels der Zustand der mangelnden Betriebsfähigkeit der Positionsbestimmungsvorrichtung als ungerechtfertigt ermittelt wurde oder ein für die mangelnde Betriebsfähigkeit der Positionsbestimmungsvorrichtung maßgeblicher Fehler behoben wurde.

Damit lässt sich in effizienter Weise eine Betriebsfähigkeit einer eine mangelnde Betriebsfähigkeit aufweisenden Positionsbestimmungsvorrichtung wiederherstellen. Gleichzeitig können Fehlerinformationen von der zentralen Stelle gesammelt werden und zur Verbesserung künftiger Positionsbestimmungsvorrichtungen verwendet werden.

Ferner wird mit der Erfindung ein Verfahren zur Signalisierung einer mangelnden Betriebsfähigkeit einer erfindungsgemäßen Positionsbestimmungsvorrichtung bereitgestellt, das insbesondere gekennzeichnet ist durch (a) das Registrieren eines unzureichenden GNSS-Empfangs des GNSS-Empfängers, (b) das Feststellen eines regulären Mobilfunk-Empfangs des Mobilfunk-Gerätes und das Entscheiden über eine Aktivierung des ersten Signalisierungsmittels in Abhängigkeit von dem Feststellungsergebnis des Feststellungsmittels und in Abhängigkeit von dem Registrierungsergebnis des Registrierungsmittels.

Gemäß einem zweiten Aspekt der Erfindung ist ein Verfahren zur Signalisierung einer mangelnden Betriebsfähigkeit einer mit einem GNSS-Empfänger versehenen Positionsbestimmungsvorrichtung vorgesehen, das gekennzeichnet ist durch das Entscheiden über das Auslösen einer Signalisierung in Abhängigkeit von wenigstens einer Positionsbestimmungsqualität des GNSS-Empfangs des GNSS-Empfängers und in Abhängigkeit von einer ersten und wenigstens einer zweiten Mobilfunk-Empfangscharakteristik des Mobilfunk-Empfangs eines von der Positionsbestimmungsvorrichtung umfassten Mobilfunkempfängers.

Ein solches Verfahren ist vorzugsweise zur Signalisierung der mangelnden Betriebsfähigkeit einer gemäß dem ersten Aspekt der Erfindung ausgeführten Positionsbestimmungsvorrichtung ausgebildet, wobei insbesondere das Auslösen der Signalisierung eine Aktivierung des ersten Signalisierungsmittels (SM1), beispielsweise eine Wiedergabe der Entscheidung mittels des ersten Signalisierungsmittels (SM1) darstellt.

Bevorzugte Ausführungsformen der Erfindung betreffen ein Verfahren, in dem (a) das Registrieren eines unzureichenden GNSS-Empfangs des GNSS-Empfängers in Abhängigkeit von wenigstens einer Positionsbestimmungsqualität des GNSS-Empfangs des GNSS-Empfängers (b) das Feststellen eines regulären Mobilfunk-Empfangs in Abhängigkeit von der ersten und wenigstens der zweiten Mobilfunk-Empfangscharakteristik des Mobilfunk-Empfangs des Mobilfunkempfängers und (c) das Entscheiden über das Auslösen einer Signalisierung in Abhängigkeit von der Registrierung eines unzureichenden GNSS-Empfangs und in Abhängigkeit von der Feststellung eines regulären Mobilfunk-Empfangs durchgeführt wird. Damit wird eine besonders einfache Möglichkeit geschaffen, im Bedarfsfall zur Signalisierung zu kommen, weil die Entscheidung zur Signalisierung auf voneinander getrennten, unabhängigen Entscheidungen der Registrierung eines unzureichenden GNSS-Empfangs und der Feststellung eines regulären Mobilfunk-Empfangs aufsetzt. Beispielsweise kann eine Registrierung eines unzureichenden GNSS-Empfangs als Voraussetzung für eine Erfassung oder eine Speicherung einer oder mehrerer erfasster Mobilfunk-Empfangscharakteristik dienen, so dass keine Mobilfunk-Empfangscharakteristik erfasst oder gespeichert wird, solange nicht ein unzureichender GNSS-Empfang registriert wurde. Ein derartiges Verfahren ist besonders effizient und zeitsparend.

Damit wird ein erfindungsgemäßes Verfahren zur Signalisierung einer mangelnden Betriebsfähigkeit einer mit einem GNSS-Empfänger versehenen Positionsbestimmungsvorrichtung bereitgestellt mit Schritten, die das Registrieren eines unzureichenden GNSS-Empfangs des GNSS-Empfängers, das Feststellen eines regulären Mobilfunk-Empfangs eines von der Positionsbestimmungsvorrichtung umfassten Mobilfunkempfängers und das Entscheiden über das Auslösen einer Signalisierung in Abhängigkeit von der Feststellung eines regulären Mobilfunk-Empfangs und in Abhängigkeit von dem Registrierung eines unzureichenden GNSS-Empfangs beinhalten.

Ausführungsformen des erfindungsgemäßen Verfahren sehen vor, dass das Registrieren und/ oder das Entscheiden durch Vergleich von wenigstens einer erfassten Positionsbestimmungsqualität mit einem vorgebbaren GNSS-Qualitätskriterium erfolgt und/ oder das Feststellen und/ oder das Entscheiden durch Vergleich von einer ersten und wenigstens einer zweiten erfassten Mobilfunk-Empfangscharakteristik mit wenigstens einem vorgebbaren Mobilfunk-Empfangskriterium erfolgt.

Damit wird ein besonders einfaches Verfahren zum Entscheiden einer erfindungsgemäßen Signalisierung beschrieben. Insbesondere kann mit einem Mobilfunk-Empfangskriterium ein Maß für eine Änderung der Mobilfunk-Empfangscharakteristik vorgegeben werden, das - solange es nicht innerhalb zweier Erfassungen der Mobilfunk-Empfangscharakterik überschritten wird - für einen regulären Mobilfunk-Empfang spricht, der in Verbindung mit einer mangelnden Positionsbestimmungsqualität des GNSS-Empfängers die Signalisierung der mangelnden Betriebsfähigkeit der Positionsbestimmungsvorrichtung bewirkt.

Die Erfindung sieht bevorzugt vor, dass das Verfahren zur Signalisierung einer mangelnden Betriebsfähigkeit einer mit einem GNSS-Empfänger versehenen Positionsbestimmungsvorrichtung, bei dem durch eine oder mehrere in zeitlichem Abstand aufeinander folgenden als G-Erfassungen bezeichneter Erfassungen der Positionsbestimmungsqualität des GNSS-Empfangs (a) ein hinreichender GNSS-Empfang bei einer oder mehreren G-Erfassungen als positives Ergebnis registriert wird, falls die Positionsbestimmungsqualität einer oder mehrerer der G-Erfassungen wenigstens ein vorgebbares GNSS-Qualitätskriterium für hinreichenden GNSS-Empfang erfüllt, und (b) ein unzureichender GNSS-Empfang bei einer oder mehreren G-Erfassungen als negatives Ergebnis registriert wird, falls die Positionsbestimmungsqualität einer oder mehrerer der G-Erfassungen wenigstens ein vorgebbares GNSS-Qualitätskriterium für unzureichenden GNSS-Empfang erfüllt, wobei in Abhängigkeit von dem Registrierungsergebnis bezüglich des GNSS-Empfangs über eine Signalisierung der mangelnden Betriebsfähigkeit entschieden wird, anhand mehrerer in zeitlichem Abstand aufeinander folgenden als M-Erfassungen bezeichneten Erfassungen der Mobilfunk-Empfangscharakteristik des Mobilfunk-Empfangs eines von der Positionsbestimmungsvorrichtung umfassten Mobilfunkempfängers (c) ein regulärer Mobilfunk-Empfang bei einer oder mehreren M-Erfassungen als positives Ergebnis festgestellt wird, falls die Mobilfunk-Empfangscharakteristik einer oder mehrerer M-Erfassungen wenigstens ein vorgebbares Mobilfunk-Empfangskriterium für regulären Mobilfunk-Empfang erfüllt, und (d) ein irregulärer Mobilfunk-Empfang bei einer oder mehreren M-Erfassungen negatives Ergebnis festgestellt wird, falls die Mobilfunk-Empfangscharakteristik einer oder mehrerer M-Erfassungen wenigstens ein vorgebbares Mobilfunk-Empfangskriterium für irregulären Mobilfunk-Empfang erfüllt, wobei auch in Abhängigkeit von dem Feststellungsergebnis bezüglich des Mobilfunk-Empfangs über eine Signalisierung der mangelnden Betriebsfähigkeit entschieden wird, und zwar in der Weise, dass (i) eine Signalisierung ausgelöst wird, wenn das Registrierungsergebnis negativ ist und das Feststellungsergebnis positiv ist und (ii) keine Signalisierung für die übrigen Kombinationen von Registrierungs- und Feststellungsergebnis ausgelöst wird.

Damit ist ein besonders einfaches und effizientes Verfahren zur Signalisierung einer mangelnden Betriebsfähigkeit der Positionsbestimmungsvorrichtung beschrieben.

Wie schon erwähnt, wird unter einer Positionsbestimmungsqualität allgemein jede Information verstanden, die geeignet ist, die Qualität der bestimmten Position - sofern eine solche vom GNSS-Empfänger ausgegeben wird - zu charakterisieren, oder - sofern keine Position vom GNSS-Empfänger ausgegeben wird - den Umstand mangelnder Positionsbestimmung anzuzeigen.

Eine Positionsbestimmungsqualität PQ kann beispielsweise anhand der weiter oben beschriebenen ausgegeben Datensätze eines als GPS-Empfängers ausgeführten GNSS-Empfängers definiert werden als PQ = 0 wenn "Status" A = V (Void) oder wenn "GPS-Qualität" Q = 0 und PQ = 1/ HDOP wenn "Status" A = A (Active), GPS-Qualität" Q = 1 oder "GPS-Qualität" Q = 2. Damit liegt PQ stets im Bereich zwischen 0 und 1. Ein Qualitätskriterium kann lauten PQ_MIN = 0,3, womit jedes PQ, das kleiner ist als PQ_MIN. das Qualitätskriterium nicht erfüllt, und jedes PQ, das gleich oder größer ist als PQ_MIN, das Qualitätskriterium erfüllt. Wird das gesetzte Qualitätskriterium nicht erfüllt, so wird ein unzureichender GNSS-Empfang registriert. Die G-Erfassungen der Positionsbestimmungsqualität erfolgen vorzugsweise mehrfach, vorzugsweise periodisch, vorzugsweise im Abstand von 0,1 bis 10 Sekunden, besonders bevorzugt im Abstand von 1 Sekunde. Die Registrierung eines unzureichenden GNSS-Empfangs muss nicht mit der ersten G-Erfassung erfolgen, die das Qualitätskriterium nicht erfüllt. Es kann auch vorgesehen sein, mehrere aufeinanderfolgende (beispielsweise 10) G-Erfassungen, die alle das Qualitätskriterium nicht erfüllen, zu sammeln, um einen unzureichenden GNSS-Empfang zu registrieren. Ferner kann es vorgesehen sein, bei einer Menge von X G-Erfassungen, von denen Y das Qualitätskriterium nicht erfüllen, nur für den Fall einen unzureichenden GNSS-Empfang zu registrieren, wenn das Verhältnis Y : X einen vorgebbaren Faktor kleiner als überschreitet. Ebenso kann es - noch allgemeiner - vorgesehen sein, mehrere Qualitätskriterien vorzusehen, wobei ein unzureichender GNSS-Empfang erst dann registriert wird, wenn von X G-Erfassungen Y G-Erfassungen ein erstes Qualitätskriterium nicht erfüllen, Z G-Erfassungen ein zweites Qualitätskriterium nicht erfüllen und so fort. Darüber hinaus kann vorgesehen sein, die Registrierung eines unzureichenden GNSS-Empfangs an eine Änderung der Positionsbestimmungsqualität zu knüpfen, beispielsweise indem die das Verhältnis der Positionsbestimmungsqualität einer zweiten GNSS-Erfassung zu der einer, der zweiten GNSS-Erfassung vorangegangenen, ersten GNSS-Erfassung ausschlaggebend wird.

Es wird hervorgehoben, dass sich die Kriterien, nach denen über die Registrierung eines hinreichenden oder unzureichenden GNSS-Empfangs entschieden wird, auch in Abhängigkeit von bereits erfolgten G-Erfassungen und/ oder Registrierungen vorgebbar ändern könnten.

Aus den vorangegangen Beschreibungsteilen zum ersten Aspekt der Erfindung ist bekannt, dass als Repräsentanten für die erfindungsgemäßen Mobilfunk-Empfangscharakteristika in einem zellulären Mobilfunknetz beispielsweise die Anzahl der für eine Kommunikationen verfügbaren Zellen, in einem GSM-System beispielsweise anhand der einer jeweiligen Zelle zugeordneten Sendefrequenz, die einem Frequenzkanal, kurz: Kanal, entspricht und der eine Kanalnummer zugeordnet ist, das Empfangsleistungs-Spektrum dieser Kanäle, und die Summe der Zahlenwerte der Empfangspegel derselben, dimensioniert in dBm (oder ähnlicher Parameter, zum Beispiel dem Zellenselektionsparameter C1, auf den im Zuge des Ausführungsbeispieles näher eingegangen wird), zu nennen sind. Prinzipiell kann eine durch eine Basisstation definierte Zelle mehrere Sendefrequenzen, jedoch mindestens eine Sendefrequenz, aufweisen. Jeder Sendefrequenz können mehrere Kommunikationskanäle zugeordnet sein, jedoch jeweils mindestens ein Kommunikationskanal - kurz. Kanal.

Ein Mobilfunk-Empfangskriterium für regulären Mobilfunk-Empfang kann durch die Vorgabe eine Mindestanzahl von wenigstens zwei verfügbaren Kanälen in der ersten und der zweiten Mobilfunk-Empfangscharakteristik festgelegt sein. Weist die erste und/ oder die zweite Mobilfunk-Empfangscharakteristik nur einen oder keinen verfügbaren Kanal auf, so wird ein irregulärer Mobilfunk-Empfang festgestellt. Weisen die erste und die zweite Mobil-Empfangscharakteristik hingegen zwei oder mehr verfügbare Kanäle auf, so wird ein regulärer Mobilfunk-Empfang festgestellt.

Auch Änderungen der Mobilfunk-Empfangscharakteristik können als Mobilfunk-Empfangskriterium formuliert werden, das die Feststellung eines regulären oder irregulären Mobilfunk-Empfangs begründet. Ändert sich beispielsweise die Summe der Zahlenwerte der Empfangspegel aller verfügbaren Kanäle, indem sie sich ausgehend von einer ersten M-Erfassung zu einer zweiten, der ersten nachfolgenden, M-Erfassungen um mehr als 50% verringert, so kann ein irregulärer Mobilfunk-Empfang festgestellt werden. Andernfalls wird ein regulärer Mobilfunk-Empfang festgestellt.

Mehrere verschiedene Mobilfunk-Empfangskriterien können zu einem gemeinsamen Mobilfunk-Empfangskriterium vereinigt sein, das sich sowohl auf die Eigenschaften einzelner Mobilfunk-Empfangscharakteristiken als auch auf ihre Verhältnisse zueinander beziehen kann.

Bevorzugte Ausführungsformen der Erfindung sehen vor, dass eine einmal ausgelöste Signalisierung bezüglich seiner Aufhebung durch für seine Auslösung nicht maßgebliche Kombinationen von Registrierungs- und Feststellungsergebnis blockiert ist.

Damit wird vorteilhaft verhindert, dass eine einmal gerechtfertigterweise getroffene Entscheidung zur Signalisierung einer tatsächlichen mangelnden Betriebsfähigkeit durch Änderungen des GNSS-Empfangs und/ oder des Mobilfunk-Empfangs wieder aufgehoben wird. Damit wird die Verschleierung eines real aufgetretenen Fehlers vermieden, und es wird eine Reparatur der - wenn auch nur zeitweise - defekten oder nicht betriebsfähigen Positionsbestimmungsvorrichtung erzwungen.

Bevorzugte Ausführungsformen der Erfindung sehen vor, dass die Verwendung des Feststellungsmittets durch das Registrieren eines unzureichenden GNSS-Empfangs ausgelöst wird.

Damit kann die Verwendung des Feststellungsmittels vermieden werden, solange ein hinreichender GNSS-Empfang gegeben ist. Im Übrigen ist das Entscheidungsmittel ja nur dann auf eine Feststellungsentscheidung des Feststellungsmittels angewiesen, wenn ein unzureichender GNSS-Empfang registriert wurde, so dass mit diesem Merkmal eine besonders einfache Verfahrensdurchführung möglich wird.

Bevorzugte Ausführungsformen der Erfindung sehen vor, dass ein Mobilfunk-Empfangskriterium die Änderung der Mobilfunk-Empfangscharakteristik - beispielsweise anhand der Anzahl der Zellen eines zellulären Mobilfunknetzes, von denen eine Mindest-Empfangs-Feldstärke oder -Leistung erfassbar ist - im Vergleich wenigstens zweier M-Erfassungen spezifiziert

Damit ist ein einfaches effektives Mobilfunk-Empfangskriterium zur besonders zuverlässigen Unterscheidung zwischen einem regulären und einem irregulären Mobilfunk-Empfang in dem kritischen Zeitraum gegeben.

Verringert sich beispielsweise zwischen einer ersten und einer der ersten nachfolgenden zweiten M-Erfassungen der Mobilfunk-Empfangscharakteristik die Anzahl der verfügbaren Kanäle, von denen jeder einer Zelle zugeordnet ist, um zwei, so wird anhand des entsprechenden Mobilfunk-Empfangskriteriums ein irregulärer Empfang festgestellt. Eine Verringerung um eins, ein Gleichbleiben oder eine (beliebige) Erhöhung werden mit der Feststellung eines regulären Empfangs quittiert.

Es wird hervorgehoben, dass sich die Kriterien, nach denen über die Feststellung eines regulären oder irregulären Mobilfunk-Empfangs entschieden wird, auch in Abhängigkeit von bereits erfolgten M-Erfassungen und/ oder Feststellungen vorgebbar ändern könnten.

In bevorzugten Weiterbildungen dieser Ausführungsformen der Erfindung geht von den wenigstens zwei M-Erfassungen wenigstens eine erste einer registrierten G-Erfassungen von unzureichendem GNSS-Empfang zeitlich voraus und folgt wenigstens eine letzte der registrierten G-Erfassung von unzureichendem GNSS-Empfang zeitlich nach.

Damit ist vorteilhaft ein einfaches effektives Mobilfunk-Empfangskriterium zur besonders zuverlässigen Unterscheidung zwischen einem regulären und einem irregulären Mobilfunk-Empfang in dem kritischen Zeitraum gegeben, in dem ein Wechsel von einem hinreichenden zu einem unzureichenden GNSS-Empfang stattfindet.

Bevorzugte Ausführungsformen der Erfindung sehen vor, dass alternativ oder optional zu einer Signalisierung durch ein Anzeige- und/ oder Leuchtmittel der Positionsbestimmungsvorrichtung eine Signalisierung durch das Senden eines Signals, das die mangelnde Betriebsfähigkeit repräsentiert, durch ein den Mobilfunkempfänger umfassendes Mobilfunkgerät an eine zentrale Datenverarbeitungseinrichtung erfolgt.

Damit lässt sich in vorteilhafter Weise eine zentrale Stelle über die mangelnde Betriebsfähigkeit der Positionsbestimmungsvorrichtung informieren, wodurch die zentrale Stelle in die Lage versetzt wird, Maßnahmen zur Unterstützung einer Instandsetzung der Positionsbestimmungsvorrichtung einzuleiten.

Für den Fall, dass die zentrale Stelle der einer Gebührenerhebungsstelle entspricht und die Positionsbestimmungsvorrichtung von einer Gebührenerhebungsvorrichtung umfasst ist, kann die Gebührenerhebungsstelle eine Nachricht an ihre Kontrolleinheiten senden, um diese über die mangelnde Betriebsfähigkeit der betreffenden Positionsbestimmungsvorrichtung zu informieren. Für eine bestimmte Karenzzeit oder eine bestimmte Karenzstrecke ab Zeit oder Ort der Feststellung der mangelnden Betriebsfähigkeit kann dem Gebührenpflichtigen dann eine Strafzahlung wegen fehlender Gebührenerhebung und/ oder -entrichtung erlassen werden, um ihm während der Karenzzeit oder über die Karenzstrecke die Möglichkeit einzuräumen, seine Gebührenerhebungsvorrichtung auszutauschen oder reparieren zu lassen, ohne dass er in der Karenzzeit oder auf der Karenzstrecke als vorsätzlicher Gebührenpreller eingestuft wird.

Ferner wird mit der Erfindung eine Positionsbestimmungsvorrichtung zur Durchführung eines gemäß dem zweiten Aspekt der Erfindung ausgebildeten Verfahrens bereitgestellt, wobei die Positionsbestimmungsvorrichtung wenigstens einen GNSS-Empfänger, wenigstens einen Mobilfunkempfänger und wenigstens eine Signalisierungsvorrichtung zur Durchführung der Signalisierung aufweist.

Vorzugsweise weist eine solche Positionsbestimmungsvorrichtung wenigstens einen Prozessor zur Erfassung und Verarbeitung von Signalen des GNSS-Empfängers und des Mobilfunkempfängers und zur Ausgabe wenigstens eines Signals an die Signalisierungsvorrichtung auf.

Überdies wird mit der Erfindung ein Computerprogrammprodukt mit ausführbaren Anweisungen eines gemäß dem zweiten Aspekt der Erfindung ausgebildeten Verfahrens bereitgestellt.

Gemäß einem dritten Aspekt der Erfindung wird ein Computerprogrammprodukt zur Signalisierung der mangelnden Betriebsfähigkeit einer mit einem GNSS-Empfänger und einer Signalisierungsvorrichtung versehenen Positionsbestimmungsvorrichtung bereitgestellt, wobei das Computerprogrammprodukt Mittel zur Ausführung wenigstens einer Anweisung zum Entscheiden über das Auslösen einer Signalisierung in Abhängigkeit von wenigstens einer Positionsbestimmungsqualität des GNSS-Empfangs des GNSS-Empfängers und in Abhängigkeit von einer ersten und wenigstens zweiten Mobilfunk-Empfangscharakteristik des Mobilfunk-Empfangs eines von der Positionsbestimmungsvorrichtung umfassten Mobilfunkempfängers enthält oder verwendet.

Bevorzugte Ausführungsformen des erfindungsgemäßen Computerprogrammproduktes sehen Mittel zur Ausführung von Anweisungen vor, die das Registrieren eines unzureichenden GNSS-Empfangs des GNSS-Empfängers in Abhängigkeit von wenigstens einer Positionsbestimmungsqualität des GNSS-Empfangs des GNSS-Empfängers, das Feststellen eines regulären Mobilfunk-Empfangs in Abhängigkeit von der ersten und wenigstens der zweiten Mobilfunk-Empfangscharakteristik des Mobilfunk-Empfangs des Mobilfunkempfängers, und das Entscheiden über das Auslösen einer Signalisierung in Abhängigkeit von der Registrierung eines unzureichenden GNSS-Empfangs und in Abhängigkeit von der Feststellung eines regulären Mobilfunk-Empfangs beinhalten oder verwenden.

Damit wird ein erfindungsgemäßes Computerprogrammprodukt zur Signalisierung der mangelnden Betriebsfähigkeit einer mit einem GNSS-Empfänger und einer Signalisierungsvorrichtung versehenen Positionsbestimmungsvorrichtung bereitgestellt, wobei das Computerprogrammprodukt Mittel zur Ausführung wenigstens folgender Anweisung enthält oder verwendet: (a) Registrieren eines unzureichenden GNSS-Empfangs des GNSS-Empfängers, dadurch gekennzeichnet, dass das Computerprogrammprodukt ferner Mittel zur Ausführung wenigstens folgender Anweisungen enthält oder verwendet: (b) Feststellen eines regulären Mobilfunk-Empfangs wenigstens eines von der Positionsbestimmungsvorrichtung umfassten Mobilfunkempfängers und (c) Entscheiden über das Auslösen einer Signalisierung in Abhängigkeit von der Feststellung eines regulären Mobilfunk-Empfangs und in Abhängigkeit von der Registrierung eines unzureichenden GNSS-Empfangs.

Bevorzugte Ausführungsformen der Erfindung sehen vor, dass Mittel zur Ausführung des Registrierens eines unzureichenden GNSS-Empfangs des GNSS-Empfängers gekennzeichnet sind durch Anweisungen zur (ai) Übernahme wenigstens einer GErfassung der Positionsbestimmungsqualität des GNSS-Empfangs des GNSS-Empfängers, und zur (aii) Erzeugung wenigstens einer binären Registrierungsentscheidung RE aus der Verarbeitung einer oder mehrerer G-Erfassungen mit dem Ergebnis 1 für hinreichendem GNSS-Empfang und dem Ergebnis 0 für unzureichendem GNSS-Empfang, dass Mittel zur Ausführung des Feststellens eines regulären Mobilfunk-Empfangs gekennzeichnet sind durch Anweisungen zur (bi) Übernahme einer ersten und wenigstens einer zweiten M-Erfassung der Mobilfunk-Empfangscharakteristik des Mobilfunkempfängers und zur (bii) Erzeugung wenigstens einer binären Feststellungsentscheidung FE aus der Verarbeitung der ersten und wenigstens der zweiten M-Erfassung mit dem Ergebnis 1 für regulären Empfang und dem Ergebnis 0 für irregulären Empfang, und dass Mittel zur Ausführung des Entscheidens über das Auslösen einer Signalisierung gekennzeichnet sind durch Anweisungen der (ci) Erzeugung und Ausgabe einer binären Signalisierungsentscheidung SE aus der Verarbeitung von einer oder mehrerer Registrierungsentscheidungen RE und einer oder mehrerer Feststellungsentscheidungen FE mit dem Ergebnis SE=0 für wenigstens eine Kombination von RE=0 und FE=1 und mit dem Ergebnis SE=1 sonst resultiert.

Damit wird ein erfindungsgemäßes Computerprogrammprodukt zur Signalisierung der mangelnden Betriebsfähigkeit einer mit einem GNSS-Empfänger und einer Signalisierungsvorrichtung versehenen Positionsbestimmungsvorrichtung bereitgestellt, das Mittel zur Ausführung wenigstens folgender Anweisungen enthält oder verwendet: (ai) Übernahme wenigstens einer als G-Erfassung bezeichneten Erfassung der Positionsbestimmungsqualität des GNSS-Empfangs des GNSS-Empfängers, (aii) Erzeugung wenigstens einer binären Registrierungsentscheidung RE aus der Verarbeitung einer oder mehrerer GErfassungen mit dem Ergebnis 1 für hinreichendem GNSS-Empfang und dem Ergebnis 0 für unzureichendem GNSS-Empfang, (bi) Übernahme einer ersten und wenigstens einer zweiten M-Erfassung der Mobilfunk-Empfangscharakteristik des Mobilfunkempfängers, (bii) Erzeugung wenigstens einer binären Feststellungsentscheidung FE aus der Verarbeitung der ersten und wenigstens der zweiten M-Erfassung mit dem Ergebnis 1 für regulären Empfang und dem Ergebnis 0 für irregulären Empfang, (ci) Erzeugung und Ausgabe einer binären Signalisierungsentscheidung SE=0 aus der Verarbeitung von einer oder mehrerer Registrierungsentscheidungen RE und einer oder mehrerer Feststellungsentscheidungen FE mit dem Ergebnis SE=0 für eine oder mehrere aufeinanderfolgende Kombinationen von RE=0 und FE=1 und mit dem Ergebnis SE=1 sonst.

Die Übernahme der G-Erfassung und/ oder der M-Erfassungen kann beispielsweise durch eine Abfrage des Computerprogrammproduktes an den GNSS-Empfänger beziehungsweise den Mobilfunk-Empfänger erfolgen oder durch eine durch einen interrupt zugelassene Eingabe der der G-Erfassung und/ oder M-Erfassungen aus dem GNSS-Empfänger beziehungsweise dem Mobilfunk-Empfänger in das Computerprogrammprodukt.

Vorzugsweise ist das Computerprogrammprodukt ausgebildet, in der Verarbeitung der ersten und wenigstens der zweiten M-Erfassung die erste und die zweite M-Erfassung miteinander zu vergleichen, und eine binäre Feststellungsentscheidung mit dem Ergebnis 1 für regulären Empfang zu treffen, wenn der Unterschied zwischen der ersten und zweiten M-Erfassung einen Schwellwert für einen maximalen Unterschied zwischen der ersten und der zweiten M-Erfassung nicht überschreitet.

Vorteilhaft ist eine erfindungsgemäße Positionsbestimmungsvorrichtung, eine Vorrichtung zur Durchführung eines erfindungsgemäßen Verfahrens oder eine Vorrichtung mit wenigstens einem erfindungsgemäßen Computerprodukt von einem mobilen, fahrzeugunabhängigen Gebührenerhebungsgerät umfasst, welches zur Erhebung von Gebühren für die Nutzung von auf ein Fahrzeug bezogenen Leistungen vorgesehen ist und welches dadurch gekennzeichnet ist, dass es einen mobilen Charakter besitzt, der dadurch gegeben ist, dass der GNSS-Empfänger, der Mobilfunkempfänger und die Signalisierungsvomchtung von einem gemeinsamen Gehäuse umfasst sind, wenigstens ein Erkennungsmittel zur Erkennung der Nutzung eines gebührenpflichtigen Verkehrsobjektes anhand der vom GNSS-Empfänger gelieferten Posidonsinformationen umfasst sowie wenigstens ein Erhebungsmittel, das einem oder mehreren der vom Erkennungsmittel erkannten Verkehrsobjekte wenigstens eine Gebühr zur Verbuchung zuordnet, wobei das Gebührenerhebungsgerät zum Mitführen in einem gebührenpflichtigen Fahrzeug vorgesehen ist und einen fahrzeugunabhängigen Charakter besitzt, der dadurch gegeben ist, dass das Gebührenerhebungsgerät keine Schnittstelle zur datentechnischen Einkopplung von Fahrdaten des Fahrzeugs in das Gebührenerhebungsgerät aufweist.

Damit wird ein vielseitiges, flexibel einsetzbares und kostengünstiges Gebührenerhebungsgerät bereitgestellt, das auf Komponenten - hier speziell die Schnittstellen zur datentechnischen Einkopplung von Fahrdaten des Fahrzeugs - die nicht zur Entscheidung über die mangelnde Betriebsfähigkeit des Gebührenerhebungsgerätes vonnöten sind, verzichtet. Beispiele für gebührenpflichtige Verkehrsobjekte sind Parkplätze, Autobahnen und innerstädtische Straßennetze. In diesem Zusammenhang kann das Erkennungsmittel die Nutzung einer verkehrstechnischen Einrichtung und/ oder das Eintreten in ein gebührenpflichtiges Gebiet erkennen.

Vorzugsweise ist der Mobilfunkempfänger durch ein Mobilfunkgerät bereitgestellt, welches ebenfalls von dem gemeinsamen Gehäuse umfasst ist, womit ein noch vielseitigeres Gebührenerhebungsgerät zur Verfügung steht.

Vorzugsweise ist die erfindungsgemäße Positionsbestimmungsvorrichtung in oder an einem Fahrzeug vorgesehen, indem es vom Fahrzeug umfasst ist oder zur behelfsmittellosen Aufnahme von einer fahrzeugseitigen Aufnahmevorrichtung sowie zur behelfsmittellosen Entnahme aus dieser Aufnahmevorrichtung, wobei das Fahrzeug dadurch gekennzeichnet ist, dass keine datentechnische Kommunikationsverbindung zwischen dem Fahrzeug und der Positionsbestimmungsvorrichtung und/ oder der fahrzeugseitigen Aufnahmevorrichtung besteht.

Ein solches Fahrzeug ist mit wenigstens einer erfindungsgemäßen Positionsbestimmungsvorrichtung oder mit wenigstens einer fahrzeugseitigen Aufnahmevorrichtung zur behelfsmittellosen Aufnahme einer erfindungsgemäßen Positionsbestimmungsvorrichtung sowie zur behelfsmittellosen Entnahme der Positionsbestimmungsvorrichtung aus dieser Aufnahmevorrichtung ausgerüstet und dadurch gekennzeichnet, dass keine datentechnische Kommunikationsverbindung zwischen dem Fahrzeug und der Positionsbestimmungsvorrichtung und/ oder der fahrzeugseitigen Aufnahmevorrichtung besteht. Damit wird von dem unabhängigen Charakter der erfindungsgemäßen Positionsbestimmungsvorrichtung Gebrauch gemacht, der darauf beruht, dass keine Fahrdaten des Fahrzeugs (Geschwindigkeitssignal, Beschleunigungssignal) vom der erfindungsgemäßen Positionsbestimmungsvorrichtung verwendet werden müssen, um einen mangelnde Betriebsfähigkeit des GNSS-Empfängers zu signalisieren. Die Erfindung gestattet somit eine vorteilhafte Ausrüstung eines Fahrzeugs mit einer erfindungsgemäßen Positionsbestimmungsvorrichtung, die dadurch vereinfacht ist, dass auf erfindungsbedingt unnötige Kommunikationsverbindungen mit dem Fahrzeug verzichtet werden kann. Die mobile Ausführung eines Positionsbestimmungsgerätes für ein Fahrzeug wird durch die Erfindung nachhaltig unterstützt.

Vorteilhaft ist das erfindungsgemäße mobile, fahrzeugunabhängige Gebührenerhebungsgerät in oder an einem Fahrzeug vorgesehen, das mit wenigstens einer fahrzeugseitigen Aufnahmevorrichtung zur behelfsmittellosen Aufnahme des Gebührenerhebungsgeräts sowie zur behelfsmittellosen Entnahme des Gebührenerhebungsgeräts aus dieser Aufnahmevorrichtung ausgerüstet ist, wobei die Aufnahmevorrichtung wenigstens einen elektrischen Anschluss aufweist, der mit einem elektrischen Energiespeicher und/ oder Energieerzeuger des Fahrzeugs in elektrischer Verbindung steht und mit wenigstens einem elektrischen Kontakt des mobilen Gebührenerhebungsgeräts (GEG) bei Aufnahme des mobilen Gebührenerhebungsgeräts (GEG) von der fahrzeugseitigen Aufnahmevorrichtung eine elektrische Verbindung zur Einrichtung einer elektrischen Stromversorgung des mobilen Gebührenerhebungsgerätes eingeht.

Ein Fahrzeug mit einer derartigen Aufnahmevorrichtung macht sich die Eigenschaften der Mobilität und der Fahrzeugunabhängigkeit des Gebührenerhebungsgerätes in vorteilhafter Weise zu Nutze, indem es eine einfache Montage- und Demontagemöglichkeit insbesondere für wechselnde Gebührenerhebungsgeräte anbietet.

Dazu weist das Gebührenerhebungsgerät vorzugsweise wenigstens ein geräteseitiges Befestigungsmittel zur lösbaren Befestigung an einem zum geräteseitigen Befestigungsmittel korrespondierenden fahrzeugseitigen Befestigungsmittel der fahrzeugseitigen Aufnahmevorrichtung auf, die beispielsweise an der Innenseite der Windschutzscheibe des Fahrzeugs angebracht, in die Frontkonsole des Fahrzeugs eingelassen oder von der Frontkonsole bereitgestellt sein kann.

Für ein erfindungsgemäßes mobiles, fahrzeugunabhängiges Gebührenerhebungsgerät wird schließlich die vorteilhafte Verwendung zur Erhebung von Gebühren in einem Gebührenerhebungssystem vorgeschlagen, das wenigstens eine zentrale Datenverarbeitungseinrichtung umfasst, die zur Übermittlung von Guthabendaten an ein Buchungsmittel im mobilen Gebührenerhebungsgerät und/ oder zur Entgegennahme von Gebührendaten des mobilen Gebührenerhebungsgerät über eine vom Mobilfunkempfänger unterstützte mobile Kommunikationsverbindung vorgesehen ist.

Im Rahmen der Erfindung wird für die Erhebung von Mautgebühren als einem ersten Beispiel der Gebührenerhebung mit dem erfindungsgemäßen Gebührenerhebungsgerät davon ausgegangen, dass zumindest im Bereich mautpflichtiger Strecken (beispielsweise Straßen mit wenigstens zwei Fahrspuren je Fahrrichtung, zum Beispiel Autobahnen) unter freiem Himmel prinzipiell sowohl ein hinreichender Empfang von Signalen von Satelliten eines GNSS-Systems möglich ist als auch die mobilfunktechnische Versorgung durch wenigstens eine Basisstation wenigstens eines zellulären Mobilfunknetzes gewährleistet ist. In Regionen abseits mautpflichtiger Strecken (beispielsweise auf einspurigen Landstraßen) kann davon ausgegangen werden, dass örtlich - auch unter freiem Himmel - kein Mobilfunk-Empfang aufgrund mangelnder mobilfunktechnischer Versorgung einer dünn besiedelten Teilregion möglich ist. Da in diesen Regionen keine (Streckenabschnitts-) Maut erhoben wird, kann hier auf einen Empfang von GNSS-Signalen, ja sogar auf das Einschalten eines Mautgerätes, grundsätzlich verzichtet werden. Das Problem, aus der Erkennung weniger oder keiner Zellen auf die Existenz einer Umgebungsbedingung zu schließen, die für einen verschlechterten oder ausbleibenden GNSS-Empfang verantwortlich sein könnte, ergibt sich für diese Bereiche daher deshalb nicht, weil es in diesen Bereichen mangels Mauterhebungsbedürfnis nicht auf einen hinreichenden GNSS-Empfang ankommt. Bei Annäherung an mautpflichtige Strecken aus solchen Regionen heraus wird die zellweise Abdeckung des Mobilfunknetzes jedoch in einem Maß zunehmen, das die Unterscheidung zwischen landschaftlich bedingter Obstruktion und freiem Himmel anhand der erfassbaren Zellen des Mobilfunknetzes möglich macht. Es kann dort - und auf den mautpflichtigen Strecken selbst - also anhand der M-Erfassungen der Mobilfunk-Empfangscharakteristiken unterschieden werden, ob ein mangelnder GNSS-Empfang seine Ursache in einer äußeren Störung (lokale umgebungsbedingte Abschattung) oder einer inneren Störung des GNSS-Systems (Fehlfunktion des GNSS-Empfängers oder eines GNSS-Satelliten) hat.

Von einer analogen Grundlage der Mobilfunknetzverfügbarkeit wird auch für den Fall der Erhebung von Parkgebühren als einem zweiten Beispiel der Gebührenerhebung mit dem erfindungsgemäßen mobilen Gebührenerhebungsgerät ausgegangen: Gebührenpflichtige Parkplätze sind in aller Regel in Städten anzutreffen, die über eine ausreichende Abdeckung der mobilfunktechnischen Versorgung mit Basisstationen verfügen.

Die Erfindung macht sich dabei den Umstand zu Nutze, dass einige mobile Gebührenerhebungsgeräte zur Übermittlung von Gebühren an die Datenverarbeitungseinrichtung einer zentrale Verrechnungsstelle oder zum Empfang von Guthabendaten von der Datenverarbeitungseinrichtung einer zentrale Verrechnungsstelle mit einem Mobilfunkgerät ausgerüstet sind, dessen Empfangscharakteristiken (auch) von den Umgebungsbedingungen abhängen.

Sofern eine Gebührenerhebung nicht in einer zur Gebührenerhebung verwendeten Positionsbestimmungsvorrichtung vorgesehen ist, sondern in einer zentralen Gebührenerhebungsstelle, können von der Positionsbestimmungsvorrichtung Positionsdaten und/ oder Nutzungsdaten, die den erkannten Nutzungsgegenstand (Straßenabschnitt, innerstädtisches Gebiet oder Parkfläche) repräsentieren, mittels eines Mobilfunkgerätes, das vom Positionsbestimmungsvorrichtung umfasst ist, übertragen werden. Aus datenschutzrechtlichen Gründen werden jedoch Fälle wie diese, in denen Positionsinformationen übertragen werden, wenn möglich, vermieden werden.

Prinzipiell genügt es zur Ausführung der Erfindung, wenn als wesentliches Element des Mobilfunkgerätes nur der Mobilfunkempfänger vorliegt und kein Mobilfunksender.

Dabei kann der Mobilfunkempfänger in die erfindungsgemäße Positionsbestimmungsvorrichtung integriert sein, beispielsweise indem es sich mit ihm ein Gehäuse teilt, oder beabstandet von dem Positionsbestimmungsvorrichtung angeordnet zumindest zeitweise in einer datentechnischen Verbindung (d. h. einer Kommunikationsverbindung für die wenigstens unidirektionale Übertragung von Daten) mit dem Positionsbestimmungsvorrichtung stehen, die ein Mitführen des Mobilfunkempfängers mit dem Positionsbestimmungsvorrichtung voraussetzt, so dass das Mobilfunkempfänger als erfindungsgemäßer Teil der Positionsbestimmungsvorrichtung anzusehen ist. Die datentechnische Verbindung kann drahtgebunden elektrisch oder fasergebunden optisch ausgeführt sein (was die Mitführbarkeit des Mobilfunkempfängers mit dem Positionsbestimmungsvomchtung in einem Fahrzeug impliziert) oder aber drahtlos ausgeführt sein, wobei Signale beispielsweise kurzreichweitig elektromagnetisch oder akustisch mit entsprechenden Sendern und Empfängern vom Mobilfunkempfänger zum Positionsbestimmungsvorrichtung übertragen werden, beispielsweise mit Bluetooth oder ähnlichen Technologien.

Wenn also ein solcher Mobilfunkempfänger bereits in Form eines Mobilfunkgerätes von einem mit einem GNSS-Empfänger ausgerüsteten Gebührenerhebungsgerät umfasst ist, kann er erfindungsgemäß dazu verwendet werden, Aussagen über eine mögliche Abschattung des GNSS-Empfängers gegenüber seiner Satelliten zu treffen, indem die Mobilfunk-Empfangscharakteristiken oder ihre Änderungen, die in Zusammenhang mit der Feststellung eines unzureichenden GNSS-Empfangs stehen könnten, erfasst und in die Entscheidung darüber eingebracht werden, ob das Positionsbestimmungsvorrichtung betriebsfähig ist oder nicht.

Damit greift die Erfindung in vorteilhafter Weise auf eine Komponente zurück, die bei solchen Positionsbestimmungsvorrichtungen, die zur Erhebung oder Verrechnung einer Gebühr mit einer fernen externen Gebührenerhebungs- oder verrechnungsstelle in datentechnische Verbindung treten müssen, in der Regel ohnehin vorhanden ist - nämlich das Mobilfunkgerät.

Im Folgenden wird die Erfindung anhand eines Ausführungsbeispieles näher erläutert.

Dazu zeigen
- Fig. 1a: eine schematische Darstellung einer erfindungsgemäßen Positionsbestimmungsvorrichtung,
- Fig. 1b: eine schematische Darstellung einer als Gebührenerhebungsgerät ausgeführten efindungsgemäßen Positionsbestimmungsvorrichtung zur Verwendung in einem Gebührenerhebungssystem mit einer zentralen Datenverarbeitungseinrichtung,
- Fig. 1c: ein Ablaufdiagramm für Schritte im erfindungsgemäßen Verfahren,
- Fig. 2a: die schematische Darstellung eines ersten Fahrweges der erfindungsgemäßen Positionsbestimmungsvorrichtung in einem zellulären Mobilfunknetz,
- Fig. 2b: die Auflistung von Daten einer ersten Mobilfunk-Empfangscharakteristik an einem ersten Ort des ersten Fahrwegs,
- Fig. 2c: die Auflistung von Daten einer zweiten Mobilfunk-Empfangscharakteristik an einem zweiten Ort des ersten Fahrwegs,
- Fig. 3a: die schematische Darstellung eines zweiten Fahrweges in einem zellulären Mobilfunknetz,
- Fig. 3b: die Auflistung von Daten einer ersten Mobilfunk-Empfangscharakteristik an einem ersten Ort des zweiten Fahrwegs,
- Fig. 3c: die Auflistung von Daten einer zweiten Mobilfunk-Empfangscharakteristik an einem zweiten Ort des zweiten Fahrwegs,
- Fig. 4a: die schematische Darstellung der Zellenstruktur eines zellulären Mobilfunknetzes in der Umgebung eines ersten Ortes auf einem dritten Fahrweg innerhalb einer Bezugszelle,
- Fig. 4b: die schematische Darstellung der Zellenstruktur eines zellulären Mobilfunknetzes in der Umgebung eines zweiten Ortes auf dem dritten Fahrweg innerhalb der Bezugszelle,
- Fig. 4c: die Auflistung von Daten einer ersten Mobilfunk-Empfangscharakteristik an dem ersten Ort in der Bezugszelle auf dem dritten Fahrweg,
- Fig. 4d: die Auflistung von Daten einer zweiten Mobilfunk-Empfangscharakteristik an dem zweiten Ort in der Bezugszelle auf dem dritten Fahrweg,
- Fig. 5: ein Ablaufdiagramm zur Veranschaulichung der Durchführung eines erfindungsgemäßen Verfahrens auf dem ersten und dem zweiten Fahrweg gemäß einer ersten Ereignisabfolge,
- Fig. 6: ein Ablaufdiagramm zur Veranschaulichung der Durchführung eines erfindungsgemäßen Verfahrens auf einem vierten Fahrweg gemäß einer zweiten Ereignisabfolge, die eine erfindungsgemäße Signalisierung umfasst,
- Fig. 7: ein Ablaufdiagramm zur Veranschaulichung der Durchführung eines erfindungsgemäßen Verfahrens auf einem fünften Fahrweg gemäß einer dritten Ereignisabfolge, die eine erfindungsgemäße Signalisierung umfasst, und
- Fig. 8: ein Ablaufdiagramm zur Veranschaulichung der Durchführung eines erfindungsgemäßen Verfahrens auf dem zweiten Fahrweg gemäß einer vierten Ereignisabfolge, die eine erfindungsgemäße Signalisierung umfasst.

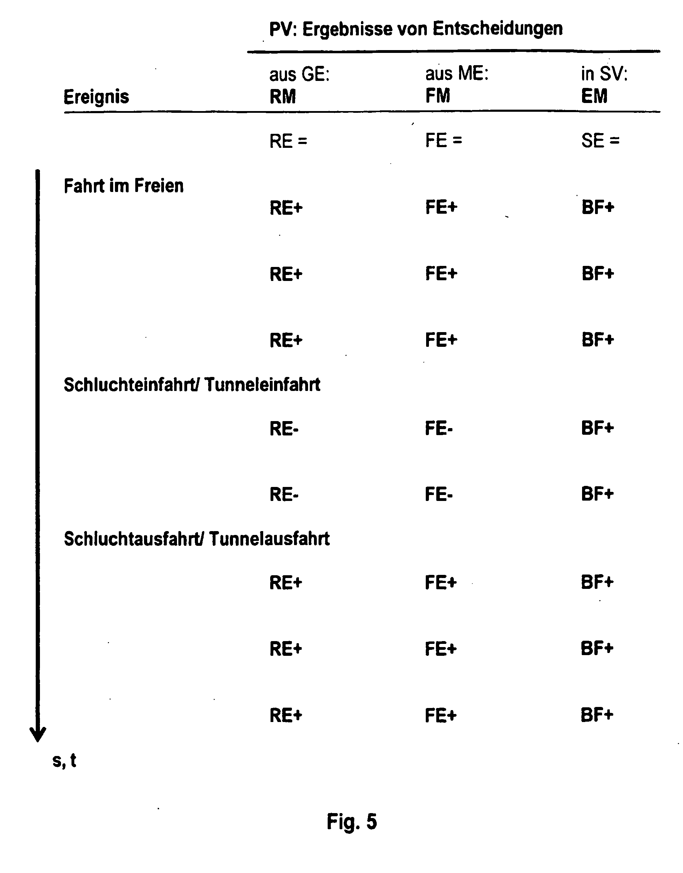

Dabei geben die Ablaufdiagramme der Figuren 5 bis 8 die Ergebnisse der Entscheidungen des erfindungsgemäßen Registrierungsmittels RM (Registrierungsentscheidung RE), Feststellungsmittels FM (Feststellungsentscheidung FE) und Entscheidungsmittels EM (Signalisierungsentscheidung SE) im Verlauf einer Fahrt entlang einer Strecken- und Zeitachse (Pfeil, gekennzeichnet durch die Symbole s und t) unter veränderlichen Umgebungsbedingungen mit beziehungsweise ohne den Ausfall des GNSS-Empfängers GE an.

Gleiche oder gleich wirkende Elemente sind mit denselben Bezugszeichen versehen.

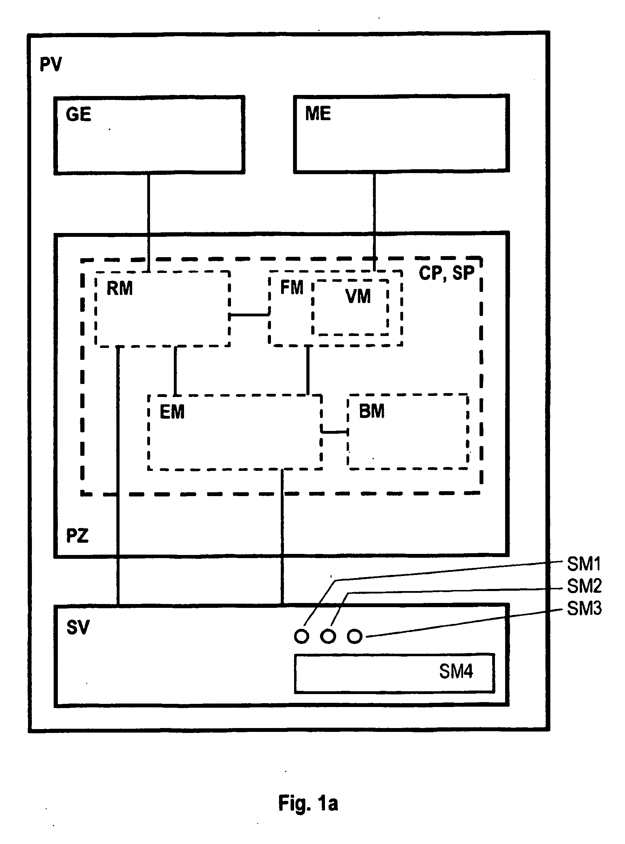

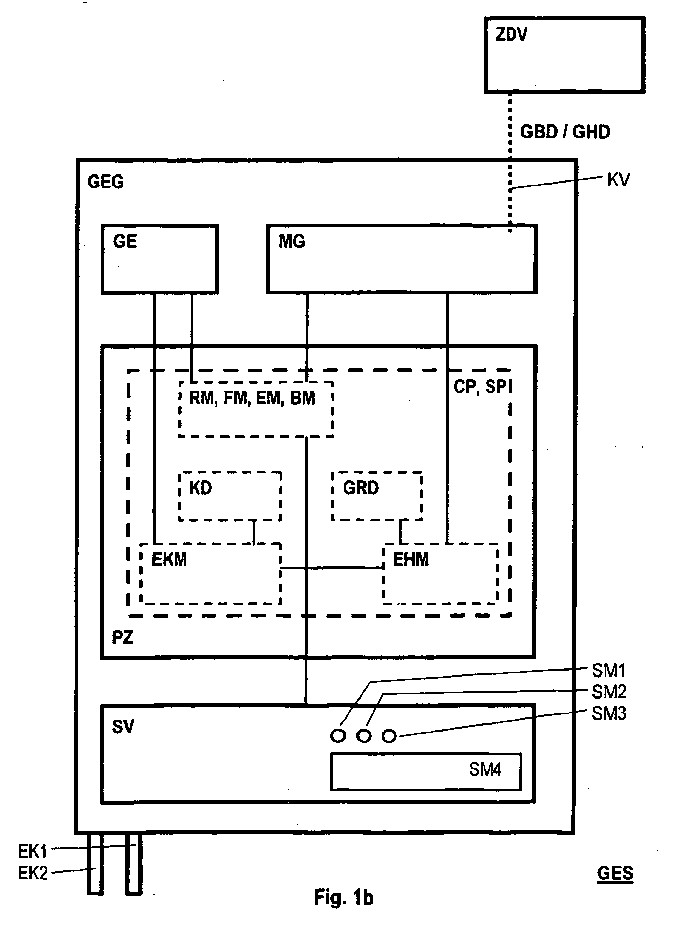

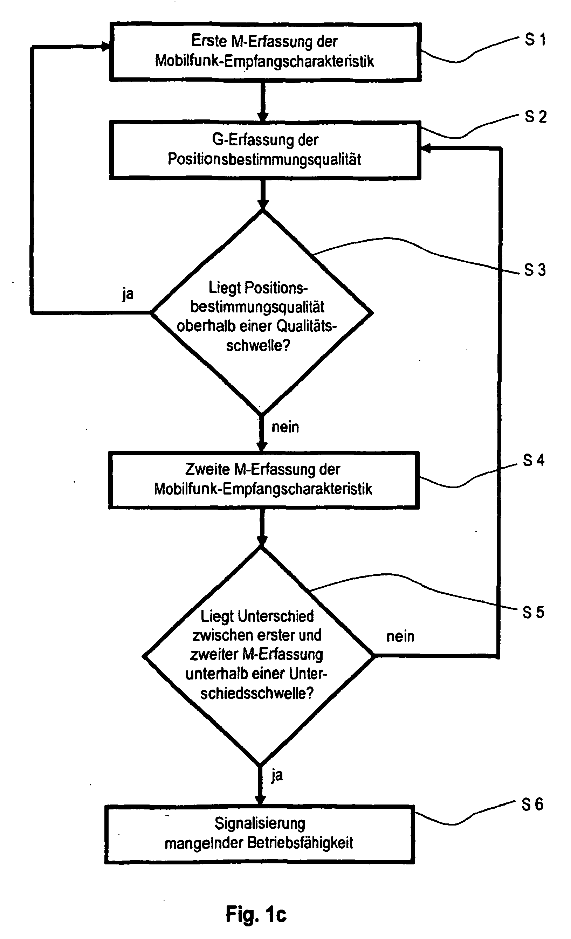

In der schematischen Darstellung einer erfindungsgemäßen Positionsbestimmungsvorrichtung PV von Fig. 1 a sind hardware-technische Baugruppen mit dicken durchgezogenen Linien umschlossen, software-technische Baugruppen einschließlich der für die Software vorgesehenen Speicher mit dicken gestrichelten Linien umschlossen. Drahtgebundene Datenkommunikation zwischen den Baugruppen ist durch dünne durchgezogene Linien angedeutet, die Kommunikationsverbindungen darstellen.

Die in Fig. 1a dargestellte Positionsbestimmungsvorrichtung PV umfasst einen GPS-Empfänger GE als Vertreter der Familie der GNSS-Empfänger, einen Mobilfunkempfänger ME, der für den Empfang von Mobilfunksignalen eines zelluiären Mobilfunknetzes ausgelegt ist, einen Prozessor PZ, durch den das erfindungsgemäße Computerprogrammproduktes CP ausgeführt wird, welches in einem Speicher SP abgelegt ist und mehrere Programmmodule aufweist, die ein Registrierungsmittel RM, ein Feststellungsmittel FM mit Vergleichsmittel VM, ein Entscheidungsmittel EM und ein Blockiermittel BM repräsentieren, sowie eine Signalisierungsvorrichtung SV mit vier Signalisierungsmitteln SM1, SM2, SM3 und SM4. Die Signalisierungsmittel sind wie folgt ausgebildet: SM1 als rote LED, SM2 als gelbe LED, SM3 als grüne LED und SM4 als LCD-Anzeige. Ein aktiviertes drittes Signalisierungsmittel SM3 zeugt mit einer grün leuchtenden LED von einer Betriebsbereitschaft der Positionsbestimmungsvorrichtung PV. Ein aktiviertes zweites Signalisierungsmittel SM2 zeugt mit einer gelb leuchtenden LED von einer - aller Voraussicht nach vorübergehenden - mangelnden Betriebsbereitschaft der Positionsbestimmungsvorrichtung PV. Ein aktiviertes erstes Signalisierungsmittel SM1 zeugt mit einer rot leuchtenden LED von einer - in der Regel nur durch eine Reparatur zu behebenden - mangelnden Betriebsfähigkeit BF- der Positionsbestimmungsvorrichtung PV.

In der schematischen Darstellung einer ersten Variante der ausführungsbeispielhaften Positionsbestimmungsvorrichtung PV als Gebührenerhebungsgerät GEG als Teil eines Gebührenerhebungssystems GES von Fig. 1b ist die drahtlose Datenkommunikation zwischen der Baugruppe Mobilfunkgerät MG und der externen zentralen Datenverarbeitungseinrichtung ZDV ist durch eine dicke gepunktete Linien angedeutet, die eine zumindest zeitweise bestehende funktechnische Kommunikationsverbindung KV darstellt. Die erfindungswesentlichen Mittel Registrierungsmittel RM, Feststellungsmittel FM, Entscheidungsmittel EM und Blockiermittel BM sind in Fig. 1b in einem gemeinsamen Programmmodul eines erfindungsgemäßen Computerprogrammproduktes CP zusammengefasst, zu dem darüber hinaus ein Erkennungsmittel EKM und ein Erhebungsmittel EHM gehören. Das Erkennungsmittel EKM verarbeitet Positionsdaten des GPS-Empfängers GE, in dem es diese mit Kartendaten KD von einem Speicherbereich vergleicht und auf diese Weise eine Übereinstimmung der bestimmten Position mit einem gebührenpflichtigen Ort, Gebiet oder Streckenabschnitt - allgemein: einem gebührenpflichtigen Verkehrsobjekt - feststellt oder negiert. Unter Kartendaten sind dabei alle möglichen geographischen Daten zu verstehen, die zur Ermittlung einer Gebührenpflicht durch Vergleich mit der bestimmten Position geeignet sind.

Wird durch das Erkennungsmittel EKM der Bezug zu einem gebührenpflichtigen Verkehrsobjekt bestätigt, so wird diese Information an das Erhebungsmittel EHM übertragen, welches das betreffende gebührenpflichtige Verkehrsobjekt mit gebührenrelevanten Daten GRD - beispielsweise einer Schadstoffklasse, eines zulässigen Gesamtgewichts und/ oder einer Achszahl eines gebührenpflichtigen Fahrzeugs - zu einer Gebühr für die Inanspruchnahme des gebührenpflichtigen Verkehrsobjektes verknüpft. Die Gebührenverrechnung kann mit debitorischer oder kreditorischer Zahlungsweise erfolgen: So kann die Gebühr einerseits durch das Erhebungsmittel von einem Guthaben abgezogen werden, welches zuvor im prepaid Verfahren mittels der zentralen Datenverarbeitungseinrichtung ZDV eines Finanzdienstleisters von einem Konto des Nutzers abgezogen und beispielsweise über die funktechnische Kommunikationsverbindung KV in Form von Guthabendaten GHD an das Mobilfunkgerät MG übertragen und in einem Bereich des Speichers SP oder einem zweiten, nicht dargestellten Speicher (beispielsweise einer Debit-Karte) abgelegt wurde. Andererseits kann diese Gebühr auch im post-paid Verfahren mittels des Mobilfunkgerätes MG über die funktechnische Kommunikationsverbindung KV in Form von Gebührendaten GBD an die zentrale Datenverarbeitungseinrichtung ZDV einer Gebührenerhebungsstelle übertragen werden, die die Gebühr von einem Konto des Nutzers abzieht, das bei einem Finanzdienstleister vorliegt.

Alternativ oder optional zur Ausführung als Gebührenerhebungsgerät GEG kann die ausführungsbeispielhafte Positionsbestimmungsvorrichtung PV in einer zweiten Variante auch als Navigationsgerät ausgeführt sein, welches in keiner der Figuren dargestellt ist. Dazu weist die ein Navigationsmittel umfassende Positionsbestimmungsvorrichtung PV oder das ein Navigationsmittel umfassende Gebührenerhebungsgerät GEG Start- und Ziel-Eingabemittel, Routenauswahl- und Zielführungsmittel auf. Die Signalisierungsvorrichtung SV kann in diesem Fall auf ein einziges Signalisierungsmittel SM1 beschränkt sein, das durch eine TFT- oder OLED-Anzeigevorrichtung bereitgestellt wird.

Ein einer möglichen Gebührenpflicht im Zuge seiner Bewegung oder Platzierung unterliegenden - nicht dargestelltes - Fahrzeug weist eine fahrzeugseitige Aufnahmevorrichtung zur behelfsmittellosen Aufnahme des Gebührenerhebungsgeräts GEG auf sowie zur behelfsmittellosen Entnahme des Gebührenerhebungsgeräts GEG aus dieser Aufnahmevorrichtung. Die Aufnahmevorrichtung weist zwei elektrischen Anschlüsse auf, die mit einem elektrischen Energiespeicher und/ oder Energieerzeuger des Fahrzeugs in elektrischer Verbindung stehen. Das Gebührenerhebungsgerät weist zwei zu den elektrischen Anschlüssen der Aufnahmevorrichtung korrespondierende elektrische Kontakte EK1 und EK2 auf, die bei Aufnahme des Gebührenerhebungsgerätes durch die Aufnahmevorrichtung in elektrischen Kontakt mit den jeweiligen elektrischen Anschlüssen der Aufnahmevorrichtung gelangen. Darüber hinaus bestehen im Betrieb der Gebührenerhebungsgerätes zwischen dem Gebührenerhebungsgerät GEG und dem Fahrzeug oder seiner Aufnahmevorrichtung keine weiteren elektrischen Verbindungen oder Kommunikationsverbindungen. Insbesondere weist das Gebührenerhebungsgerät keine Schnittstelle zur datentechnischen Einkopplung von Fahrdaten des Fahrzeugs in das Gebührenerhebungsgerät GEG auf.

Mit Hinweis auf Fig. 1a wird nun ein bevorzugter Ablauf des erfindungsgemäßen Verfahrens in Fig. 1c näher erläutert. Das Registrierungsmittel RM erfasst periodisch im Sekundentakt die Positionsbestimmungsqualität des GNSS-Empfangs des GNSS-Empfängers GE und speichert eine bestimmte Anzahl mehrerer aufeinander folgende G-Erfassungen der Positionsbestimmungsqualität des GNSS-Empfangs des GNSS-Empfängers GE in einem Datenspeicher (nicht dargestellt ab). Über die bestimmte Anzahl an G-Erfassungen hinaus wird stets die älteste G-Erfassung durch die jüngste G-Erfassung im Datenspeicher überschrieben.

Das Feststellungsmittel FM erfasst periodisch im Sekundentakt eine erste Mobilfunk-Empfangscharakteristik des Mobilfunkempfängers ME und speichert eine bestimmte Anzahl mehrerer aufeinander folgende erste M-Erfassungen der Mobilfunk-Empfangscharakteristik des Mobilfunkempfängers ME in einem Datenspeicher (nicht dargestellt ab). Die ersten M-Erfassungen können jeweils Mittelwerte mehrerer M-Erfassungen sein, die innerhalb einer Sekunde aufgenommen wurden. Über die bestimmte Anzahl an M-Erfassungen hinaus wird stets die älteste M-Erfassung durch die jüngste M-Erfassung im Datenspeicher überschrieben.

Das führt dazu, dass im Prinzip jeder G-Erfassung (Schritt S2) eine der G-Erfassung zuordenbare erste M-Erfassung (Schritt S1) vorangeht. Für jede G-Erfassung prüft das Registrierungsmittel RM, ob die Positionsbestimmungsqualität des GNSS-Empfangs einem festgelegten Mindestmaß an Positionsbestimmungsqualität entspricht (Schritt S3). Ist dies der Fall, so wird die Aufnahme von ersten M-Erfassungen und G-Erfassungen fortgesetzt. Ist dies nicht der Fall, so wird ein unzureichender GNSS-Empfang von dem Registrierungsmittel RM registriert und eine der registrierten G-Erfassung mangelnder Positionsbestimmungsqualität nachfolgende erste M-Erfassung als zweite M-Erfassung definiert oder eine zweite M-Erfassung der Mobilfunk-Empfangscharakteristik durchgeführt, die der registrierten G-Erfassung mangelnder Positionsbestimmungsqualität zeitlich nachfolgt (Schritt S4).

Das vom Feststellungsmittel FM umfasste Vergleichsmittel VM ermittelt nun den Unterschied zwischen der ersten und der zweiten M-Erfassung. Das Feststellungsmittel FM prüft sodann, ob der Unterschied zwischen der ersten und der zweiten M-Erfassung im Rahmen des definierten Mobilfunk-Empfangskriteriums liegt, der für einen regulären Mobilfunk-Empfang sprechen würde (Schritt S5). Ist dies nicht der Fall, weil die Abweichung zwischen der ersten und der zweiten M-Erfassung so groß ist, dass das Feststellungsmittel FM einen irregulären Mobilfunk-Empfang feststellt, so wird eine erneute G-Erfassung vorgenommen, ohne dass neue erste M-Erfassungen durchgeführt werden; die zweite M-Erfassung kann als erste M-Erfassung (re-)definiert werden. Ist jedoch die Abweichung zwischen der ersten und der zweiten M-Erfassung so klein, dass das Feststellungsmittel FM einen regulären Mobilfunk-Empfang feststellt, so entscheidet das Entscheidungsmittel EM über das Auslösen der Signalisierung einer mangelnden Betriebsfähigkeit des GNSS-Empfängers (Schritt S 6).

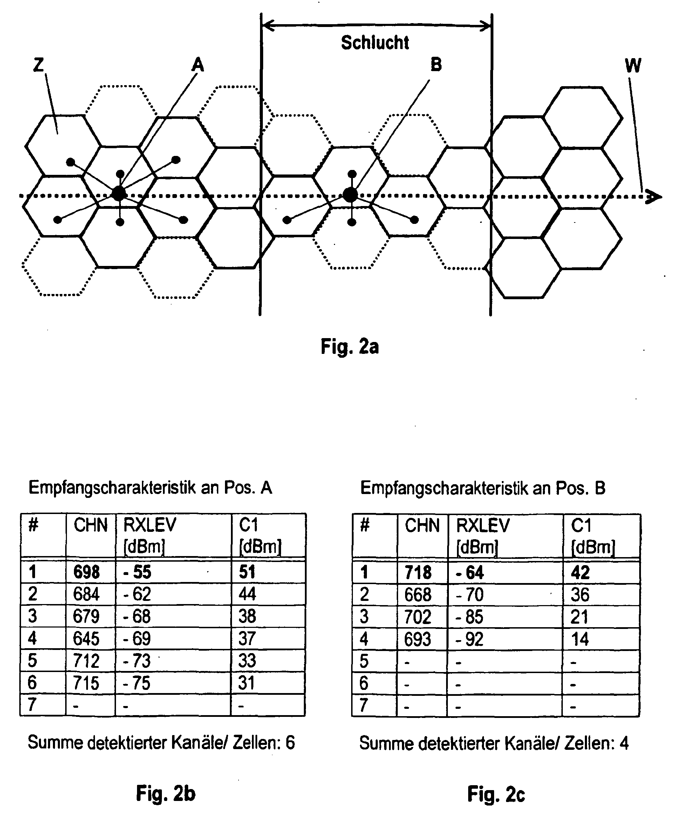

Ein erster Fahrweg W führt, wie in Fig. 2a schematisch dargestellt, ein mit dem beschriebenen Gebührenerhebungsgerät GEG ausgestattetes Fahrzeug durch eine Zellenstruktur eines Mobilfunksystems mit als Waben wiedergegebenen Zellen Z unter anderem durch eine Schlucht. Mit gepunkteten Umrissen gekennzeichnete Waben repräsentieren Zellen Z, die wohl der Kernzelle, in der sich das Fahrzeug befindet, benachbart sind, deren Feldstärke aber für einen Empfang nicht an jeder Position auf dem Fahrweg W innerhalb der jeweiligen Kernzelle ausreichend ist.

An einem ersten Ort A außerhalb der Schlucht, als Position A bezeichnet, beinhaltet die von dem Mobilfunk-Empfänger ME erfasste erste Mobilfunk-Empfangscharakteristik, von der Fig. 2b einen Auszug wiedergibt, eine Kanalanzahl von 6 entsprechend der durch mit gefüllten Kreisen in den entsprechenden Zellen endenden Verbindungslinien zur Position A (erster Ort A in Fig. 2a). Erfassungen der Positionsbestimmungsqualität außerhalb der Schlucht weisen einen ständigen Empfang von Signalen von wenigstens 4 GPS-Satelliten mit einer HDOP von kleiner als 3 auf, so dass dort eine Positionsbestimmungsqualität gegeben ist, die einem hinreichenden GPS-Empfang entspricht. Der hinreichende GPS-Empfang wird von dem Registrierungsmittel RM anhand der vom GPS-Empfänger GE bereitgestellten Daten mit positivem Ergebnis RE+ registriert und an das Entscheidungsmittel EM übergeben. Dazu wird auf Fig. 5 verwiesen. Das Entscheidungsmittel EM verfügt ferner über die Feststellung eines regulären Mobilfunk-Empfangs, die vom Feststellungsmittel FM als FE+ ausgegeben wird. Diese Feststellung kann jedoch vom Entscheidungsmittel EM ignoriert werden, weil es eine positive Signalisierungsentscheidung SE = BF+, das beispielsweise das Ausbleiben einer Signalisierung bedingt, stets ohne Information des Feststellungsmittels FM treffen kann, solange das Registrierungsmittel RM einen hinreichenden GPS-Empfang mitteilt.

Das dritte Signalisierungsmittel SM3, die grüne LED, die einen betriebsfähigen Zustand des Gebührenerhebungsgerät GEG signalisiert, ist mithin aktiviert.

Während der Fahrt werden die erfassten ersten Mobilfunk-Empfangscharakteristiken im Speicher SP abgelegt, der beispielsweise eine über die vorangegangene Stunde gemittelte Mobilfunk-Empfangscharakteristik, vier über jeweils die vorletzten, dritt- viert- und fünftletzten Minuten gemittelte Mobilfunk-Empfangscharakteristiken und 12 jeweils über 5-Sekundenabschnitte der letzten Minute gemittelte Mobilfunk-Empfangscharakteristiken, bevorzugt zusammen und in Zuordnung mit den zeitgleichen Registrierungsentscheidungen RE aufnimmt.

Nach Einfahrt in die Schlucht ändert sich die Positionsbestimmungsqualität Am zweiten Ort B innerhalb der Schlucht, in Fig. 2a als Position B bezeichnet, werden nunmehr nur noch Signale von höchstens drei GPS-Satelliten vom GPS-Empfänger GE erfasst, wobei sich die HDOP auf 5 verschlechtert. Eine Positionsbestimmung ist daher nicht mehr mit hinreichender Genauigkeit möglich. Das Registrierungsmittel RM registriert anhand der vom GPS-Empfänger GE bereit-gestellten Qualitätswerten eine Positionsbestimmungsqualität, die das vorgegebene Qualitätskriterium von PQ > PQ_MIN nicht erfüllt (PQ =1/ HDOP, PQ_MIN = 0,3) und als negatives Ergebnis RE-, das einem unzureichenden GPS-Empfang entspricht, an das Entscheidungsmittel EM ausgegeben wird.

An dem zweiten Ort B innerhalb der Schlucht, beinhaltet die erfasste zweite Mobilfunk-Empfangscharakteristik, von der Fig. 2c einen Auszug wiedergibt, eine von dem Mobilfunk-Empfänger ME detektierbare Kanalanzahl von 4 entsprechend der durch mit gefüllten Kreisen in den entsprechenden Zellen Z endenden Verbindungslinien zur Position B (zweiter Ort B in Fig. 2a).

Das Feststellungsmittel FM besitzt Zugriff auf die im Speicher SP abgelegten Information zu der Mobilfunk-Empfangscharakteristik von Position A; ein Vergleich mit der Mobilfunk-Empfangscharakteristik von Position B wird durch Weitergabe der negativen Registrierungs-Ergebnisses RE- des Registrierungsmittels RM an das Feststellungsmittel FM ausgelöst. Im Ergebnis stellt das Feststellungsmittel FM fest, dass sich von einer ersten zu einer zweiten M-Erfassung eine Änderung der Mobilfunk-Empfangscharakteristik über einen Zeitraum ergeben hat, in der die negative Registrierung des unzureichenden GPS-Empfangs durch das Registrierungsmittel erfolgte, und zwar eine Änderung, die in einer Minderung der erfassten Kommunikationskanäle um 2 besteht. Diese Minderung entspricht einem vorgegebenen Mobilfunk-Empfangskriterium zur Feststellung eines irregulären Mobilfunk-Empfangs, welches eine Veränderung der Anzahl der Kommunikationskanäle um mehr als 1 fordert, während das Mobilfunk-Empfangskriterium für regulären Mobilfunk-Empfang nur die Veränderung der Kanalanzahl um 1 oder 0 zulässt.

Das negative Ergebnis FE- eines irregulären Mobilfunk-Empfangs wird an das Entscheidungsmittel EM übertragen, welches ebenfalls das negative Ergebnis RE- eines unzureichenden GPS-Empfangs erhalten hat. Die Korrelation zwischen unzureichendem GPS-Empfang und irregulären Mobilfunk-Empfang in Form der Ergebnisse RE- und FE- führt das Entscheidungsmittel EM zum Ergebnis BF+ einer ausbleibenden Signalisierung - wie in Fig. 5 dargestellt. Diese Entscheidung entspricht der Annahme, dass ein unzureichender GPS-Empfang dann auf widrige Umgebungsbedingungen zurückzuführen - und daher nur vorübergehend - ist, wenn ein irregulärer Mobilfunk-Empfang festgestellt wird, der diesen widrigen Umgebungsbedingungen geschuldet sein könnte.

Daher wird - gerechtfertigterweise - trotz eines unzureichenden GPS-Empfangs keine Signalisierung einer mangelnden Betriebsfähigkeit der Positionsbestimmungsvorrichtung ausgelöst. Infolgedessen bleibt das dritten Signalisierungsmittel SM3 (grüne LED) aktiviert, während das erste Signalisierungsmittel SM1, die rote LED deaktiviert bleibt. In einer alternativen Variante kann das Entscheidungsmittel EM die Registrierung eines unzureichenden GPS-Empfangs ohne die Entscheidung über eine Betriebsfähigkeit die mangelnde Betriebsbereitschaft des Gebührenerhebungsgeräts GEG signalisieren, indem eine Deaktivierung des dritten Signalisierungsmittels SM3 (grüne LED) und eine Aktivierung des zweiten Signalisierungsmittels SM2 (gelbe LED) ausgelöst wird. Optional kann eine entsprechende Mitteilung über das vierte Signalisierungsmittel SM4, die LCD-Anzeige, angezeigt werden.

Nach Verlassen der Schlucht entspricht die Positionsbestimmungsqualität des GPS-Empfangs wieder derjenigen eines hinreichenden Empfangs, so dass das Entscheidungsmittel EM kein Ergebnis erzeugt, das zu einer Signalisierung einer mangelnden Betriebsfähigkeit BF- der Positionsbestimmungsvorrichtung PV führt.

Die erneute Registrierung eines hinreichenden GPS-Empfangs führt in der beschriebenen alternativen Variante dazu, das zuvor deaktivierte dritte Signalisierungsmittel SM3 (grüne LED) wieder zu aktivieren, das zuvor aktivierte zweite Signalisierungsmittel SM2 (gelber LED) zu deaktivieren und die Mitteilung, die über das vierte Signalisierungsmittel SM4 angezeigt wurde, wieder zu löschen.

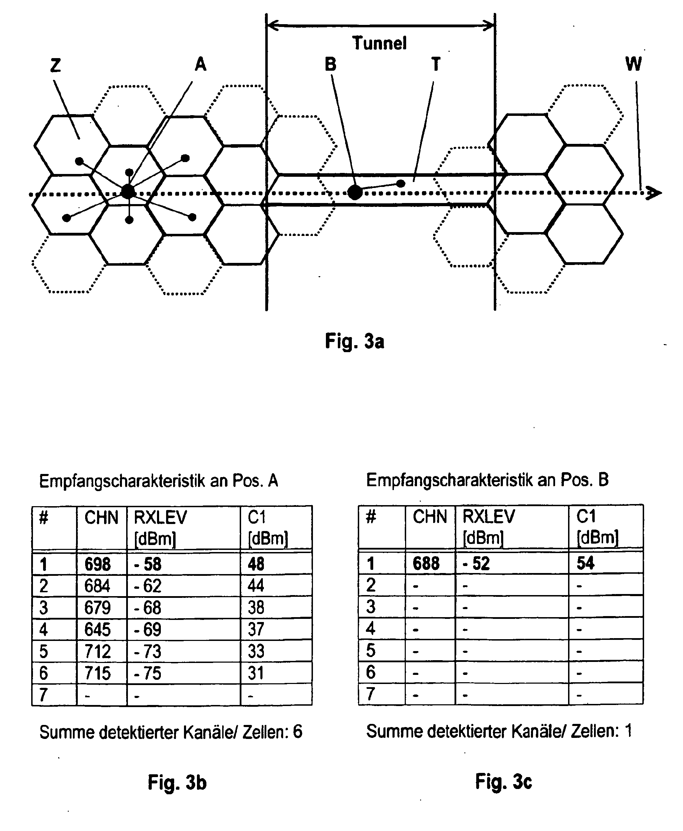

Für den in Fig. 3a dargestellten Fahrweg W durch einen Tunnel ergibt sich ein analoges Ergebnis. Die Unterscheidung dieses Fahrwegs gegenüber dem durch die Schlucht (Fig. 2a) besteht darin, dass im Tunnel kein GPS-Empfang möglich ist, was sich darin äußert, dass der GPS-Empfänger GE keine Position ausgibt, oder eine Position ausgibt, die mit dem Vermerk "ungültig" versehen ist. Eine solche Ausgabe des GPS-Empfängers GE entspricht einer Positionsbestimmungsqualität von PQ = 0, womit ein unzureichender GPS-Empfang registriert wird.

Im Tunnel wird an der Position B eine zweite Mobilfunk-Empfangscharakteristik erfasst, die nur einen Kommunikationskanal aufweist, nämlich den der Tunnelzelle T, die durch Anordnung eines Leckwellenleiters als langgestreckte Antenne (beispielsweise ein mit Schlitze versehenes Koaxialkabel) über die Länge des Tunnels bereitgestellt wird (Fig. 3b). Alternativ kann bei einem kurzen Tunnel die Mobilfunkversorgung durch im Ein- und Ausgangsbereich des Tunnels installierte und in den Tunnel einstrahlende Basisstationen von Sektorzellen, beispielsweise in Form von Repeatern, gewährleistet sein. Im Vergleich mit der ersten Mobilfunk-Empfangscharakteristik an der Position A außerhalb des Tunnels (Fig. 3a) stellt das Feststellungsmittel FM innerhalb des Tunnels mit der Erfassung einer Mobilfunk-Empfangscharakteristik, die nur die Tunnelzelle T umfasst, einen irregulären Mobilfunk-Empfang fest, der das Entscheidungsmittel EM nicht dazu führt, die Signalisierung einer mangelnde Betriebsfähigkeit BF- auszulösen.

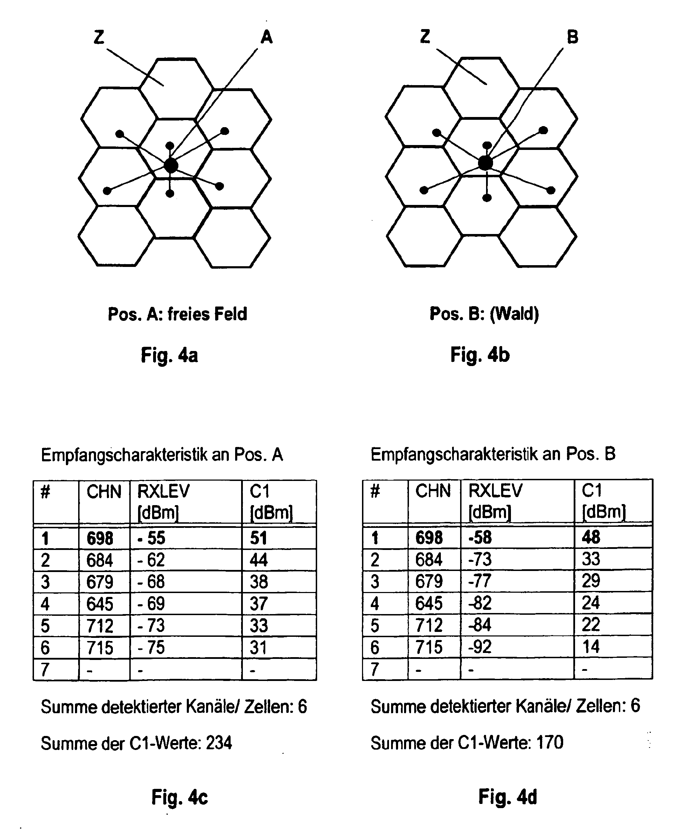

Am Beispiel eines Fahrwegs durch einen Wald (Figuren 4a und 4b) wird klar, dass nicht immer die Anzahl der aktiven Zellen beziehungsweise ihre Änderung ausschlaggebend sein muss für die Feststellung eines irregulären Mobilfunk-Empfangs. Bleibt die Anzahl der verfügbaren Kanäle auch bei Registrierung eines unzureichenden GPS-Empfangs, der aus der zeitweisen Abschattung von Bäumen resultiert, konstant, so ist ein weitere Parameter Bildung des Mobilfunk-Empfangskriteriums heranzuziehen: Hierzu kommen die Zellenselektionsparameter C1 in Frage, die sich jeweils - wie dem Fachmann bekannt ist - aus den Empfangspegeln RXLEV der Mobilfunkkanäle durch bloße Addition und Subtraktion anderer dBm-Werte ergibt. An der Position A auf freiem Feld beträgt in der ersten M-Erfassung die Summe der C1-Werte aller verfügbaren Kanäle 234 (Fig. 4c); an der Position B im Wald beträgt in der zweiten M-Erfassung die Summe der C1-Werte durch baumbedingte Abschattungen nur 170. Ein Mobilfunk-Empfangskriterium, das einen Grenzwert der Änderung der Summe der C1-Werte vorgibt, kann dazu dienen, auch dann einen irregulären Mobilfunk-Empfang festzustellen, wenn die Kanalanzahl konstant bleibt.

Allgemein sind die Anforderungen an einen irregulären Mobilfunk-Empfang schwächer zu formulieren, wenn die Positionsbestimmungsqualität bei unzureichendem GPS-Empfang größer ist.

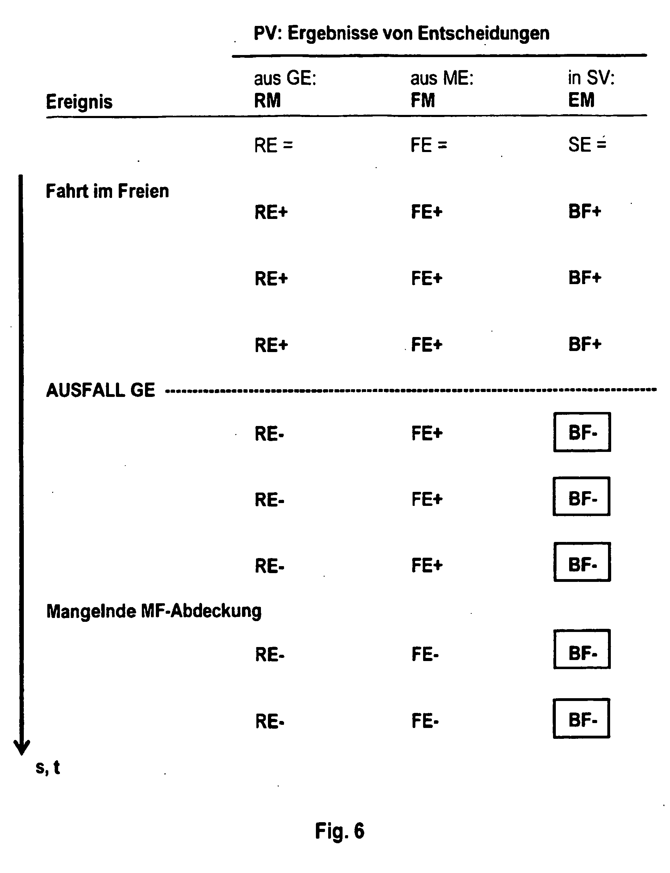

Für eine Fahrt im Freien zeigt Fig. 6 den Ablauf der Ereignisse, im Zuge derer ein Ausfall des GPS-Empfängers GE in einem Gebiet ausreichender Mobilfunk-Abdeckung stattfindet. Der Ausfall wird von dem Registrierungsmittel RM unter Ausgabe eines negativen Registrierungsergebnisses RE- aufgrund einer ausbleibenden Positionsinformation des GPS-Empfängers GE registriert. Das Feststellungsmittel FM stellt einen regulären Mobilfunk-Empfang fest, weil sich die Mobilfunk-Empfangscharakteristik über einen maßgeblichen Zeitraum, der die erstmalige Registrierung des unzureichenden GPS-Empfangs einschließt, nicht außerhalb eines Mobilfunk-Empfangskriteriums für regulären Mobilfunk-Empfang ändert. Der Unterschied zwischen einer ersten M-Erfassung der Mobilfunk-Empfangscharakteristik vor der Registrierung des unzureichenden GPS-Empfangs und einer zweiten M-Erfassung nach der Registrierung des unzureichenden GPS-Empfangs wird als so gering gegenüber einer Schwelle für irregulären Mobilfunk-Empfang festgestellt, dass das Feststellungsergebnis zugunsten eines regulären Mobilfunk-Empfangs ausfällt. Das positive Feststellungsergebnis FM+ wird von dem Entscheidungsmittel EM zusammen mit dem negativen Registrierungsergebnis RE- zur der Entscheidung gebracht, die Signalisierung einer mangelnden Betriebsfähigkeit BF- der Positionsbestimmungsvorrichtung PV auszulösen.

Diese Entscheidung ist gerechtfertigt durch die Annahme, dass ein unzureichender GPS-Empfang dann auf einen Fehler im GPS-System zurückzuführen - und damit in der Regel nicht vorübergehend - ist, wenn ein regulärer Mobilfunk-Empfang festgestellt wird, der auf keine widrigen Umgebungsbedingungen, die Auslöser für den unzureichenden GPS-Empfang sein könnten, zurückgeführt werden kann.

Die ausgelöste Signalisierung wird durch das Signalisierungsmittel SM1 (rote LED) wiedergegeben. Gleichzeitig wird durch die Signalisierung das dritte Signalisierungsmittel SM3 (grüne LED) deaktiviert, um widersprüchliche Signalisierungen zu vermeiden. Ferner wird über das vierte Signalisierungsmittel SM4 eine Meldung mittels der LCD-Anzeige zum Erscheinen gebracht, die auf die mangelnde Betriebsfähigkeit des Gebührenerhebungsgerätes GEG hinweist, beispielsweise durch den Text "automatische Mauterhebung gestört - bitte buchen Sie manuell".

Mit der Auslösung der Signalisierung der mangelnden Betriebsfähigkeit BF- durch das Entscheidungsmittel EM wird auch das Blockiermittel BM aktiviert. Die durch das Blockiermittel BM hervorgerufene Blockierung des Entscheidungsmittels für anders lautende Ergebnisse als das der einmal signalisierten mangelnden Betriebsfähigkeit BF- ist in Fig. 6 durch die Kästchen um die Ergebnis-Zeichen BF- herum angedeutet.

Eine nachträgliche Änderung des Mobilfunk-Empfangs von einem regulären zu einem irregulären kann damit nicht dazu führen, dass die Entscheidung zur Signalisierung von dem Entscheidungsmittel EM wieder aufgehoben und die Signalisierung zurückgenommen oder deaktiviert wird. Im Beispiel der Fig. 6 gelangt das Fahrzeug in einem Bereich, der durch eine mangelnde Mobilfunk-Abdeckung gekennzeichnet ist - das heißt, dass zeitweise kein Kanal für Mobilfunk zur Verfügung steht. Diese Änderung der Mobilfunk-Charakteristik wird von dem Feststellungsmittel FM wohl festgestellt und durch die Feststellung eines irregulären Mobilfunk-Empfangs quittiert. Jedoch verhindert das Blockiermittel BM die Verarbeitung des Feststellungsergebnisses durch das Entscheidungsmittel EM, womit das einmal vom Entscheidungsmittel EM ermittelte Ergebnis der mangelnden Betriebsfähigkeit BF- aufrecht erhalten bleibt.

Alternativ kann das Blockiermittel BM auch auf das Feststellungsmittel FM wirken, indem es aufgrund der Signalisierung BF- eine Änderung des Feststellungsergebnisses des Feststellungsmittels FM blockiert.

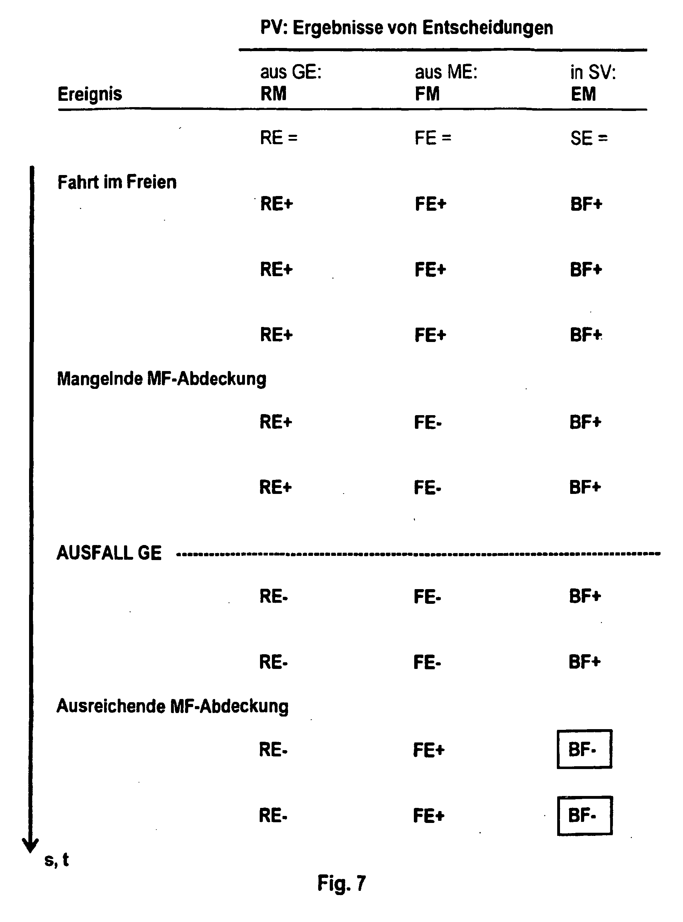

Für eine weitere Fahrt im Freien zeigt Fig. 7 den Ablauf der Ereignisse, im Zuge derer ein Ausfall des GPS-Empfängers GE in einem Gebiet mangelnder MF-Abdeckung stattfindet. In einem solchen Gebiet steht aufgrund fehlender Basisstationen zumindest zeitweise für das Feststellungsmittel keine Mobilfunk-Empfangscharakteristik zur Verfügung, deren Änderung es im Zuge der Registrierung eines unzureichenden GPS-Empfangs als Maß für die Feststellung eines irregulären Mobilfunk-Empfangs verwenden könnte. Stattdessen stellt das Feststellungsmittel aufgrund mangelnder beziehungsweise profilloser (Kanalanzahl = 0) erster Mobilfunk-Charakteristik fest, dass ein irregulärer Mobilfunk-Empfang vorliegt. In der Kombination von unzureichendem GPS-Empfang RE- - in diesem Fall resultierend aus einem tatsächlichen Ausfall des GPS-Empfängers GE - und irregulären Mobilfunk-Empfang FE- gibt es erfindungsgemäß für das Entscheidungsmittel keinen Anlass, eine mangelnde Betriebsfähigkeit BF- zu bescheiden.

Das erste Signalisierungsmittel SM1 (rote LED) wird nicht aktiviert. Dennoch liegt ein unzureichender GPS-Empfang vor, der einer Bekanntgabe würdig ist. Diese erfolgt durch Deaktivieren des dritten Signalisierungsmittels SM3 (grüne LED) und Aktivieren des zweiten Signalisierungsmittels SM2 sowie zusätzlich unter Wiedergabe des Textes "GPS-Empfang gestört"

Das ändert sich, wenn das Gebührenerhebungsgerät GEG mit dem mautpflichtigen Fahrzeug in ein Gebiet gelangt, das eine ausreichende Mobilfunk-Abdeckung aufweist, die durch eine oder mehrere Basisstationen in Empfangsreichweite des Mobilfunk-Empfängers gegeben ist. Ein solches Gebiet ist zum Beispiel in der Nähe und in der Gegenwart von höherrangigen, viel befahrenen Straßen, insbesondere mautpflichtigen Autobahnen, vorhanden, für die das Gebührenerhebungsgerät GEG betriebsfähig sein sollte. Eine Nachricht über die mangelnde Betriebsfähigkeit des Gebührenerhebungsgerätes GEG sollte den Nutzer also bereits vor dem Befahren der mautpflichtigen Straße erreichen.

Das Auftreten und die Erfassung einer zweiten Mobilfunk-Empfangscharakteristik, die nicht leer ist, sondern Empfangspegel einer oder mehrerer Kanäle umfasst führt das Feststellungsmittel FM in Bezug auf die leere erste M-Erfassung zur Feststellung eines regulären Mobilfunk-Empfangs mit dem positiven Ergebnis FE+, das nun zusammen mit dem negativen Ergebnis des unzureichenden GPS-Empfangs RE- am Eingang des Entscheidungsmittels anliegt Das führt das Entscheidungsmittel - gerechtfertigterweise - zur Auslösung einer Signalisierung der mangelnden Betriebsfähigkeit BF-, die das Einschalten des ersten Signalisierungsmittels SM1 (rote LED) beinhaltet, das Ausschalten des zweiten Signalisierungsmittels SM2 (gelbe LED) und die Änderung des Wiedergabetextes auf der LCD-Anzeige des vierten Signalisierungsmittels SM4 in "Automatische Mauterhebung gestört - bitte buchen Sie manuell".

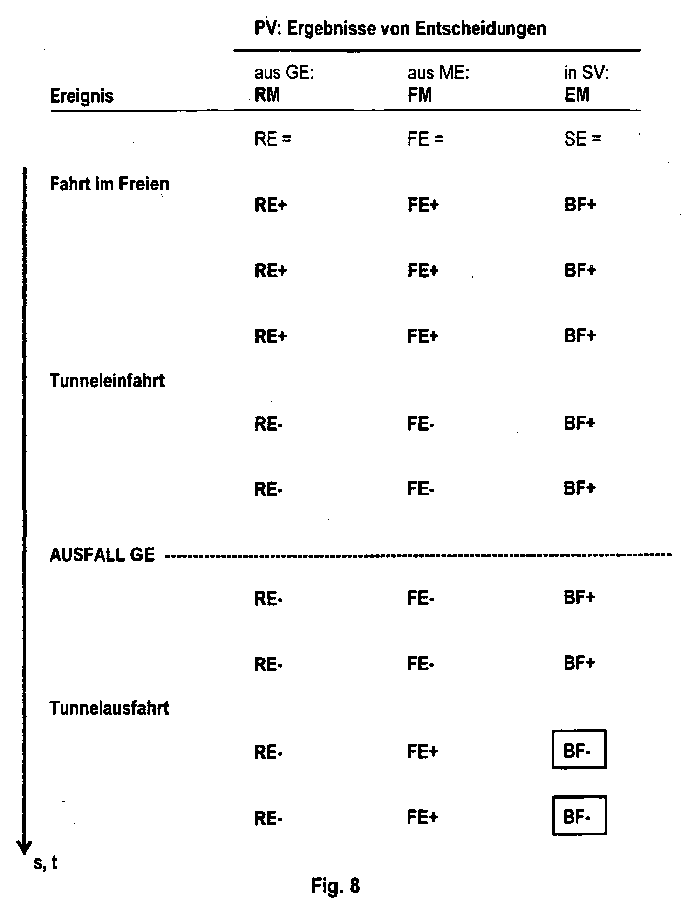

Ähnliche Verhältnisse ergeben sich mit der in Fig. 8 gezeigten Verlaufsdarstellung für eine Fahrt durch einen Tunnel, wobei der Ausfall des GPS-Empfängers GE im Tunnel stattfindet.

Bei Einfahrt in den Tunnel liegen die aus Fig. 5 bekannten Verhältnisse vor: Der unzureichende GPS-Empfang wird von irregulärem Mobilfunk-Empfang begleitet und führt daher nicht zur Auslösung der erfindungsgemäßen Signalisierung, wohl aber zur Aktivierung des zweiten Signalisierungsmittels SM2 (gelbe LED), das eine - möglicherweise - vorübergehende Störung signalisiert.

Fällt bei unzureichendem GPS-Empfang der GPS-Empfänger GE aus, so ergibt sich ein Zustand der von dem Registriermittel RM nicht anders bewertet werden kann als die Abschattung der Satelliten. In Gegenwart des festgestellten irregulären Mobilfunk-Empfangs mit nunmehr bezüglich des bevorstehenden Ausfalls des GPS-Empfängers im Tunnel erster Erfassung der Mobilfunk-Empfangscharakteristik wird daher nach wie vor - auch bei Ausfall des GPS-Empfängers GE - prinzipiell ungerechtfertigterweise, aber dennoch erfindungsgemäß - keine mangelnde Betriebsfähigkeit BF- durch das Entscheidungsmittel EM signalisiert. Die gelbe LED bleibt somit fälschlicherweise aktiviert. Dies stellt jedoch im Tunnel kein Problem dar, weil im Tunnel eine Ortung mittels GPS ohnehin nicht ohne Weiteres möglich ist.

Mit dem Verlassen des Tunnels ändert sich jedoch die Mobilfunk-Empfangscharakteristik mit der Erfassung einer zweiten Mobilfunk-Empfangscharakteristik insofern, als dass sie nun mehr Empfangskanäle als im Tunnel aufweist. Das Feststellungsmittel FM stellt mithin gegenüber der ersten M-Erfassung einen regulären Mobilfunk-Empfang fest und gibt das Ergebnis FE+ an das Entscheidungsmittel EM ab, dem seinerseits das negative Ergebnis RE- des Registrierungsmittels RM vorliegt. Ein regulärer Mobilfunk-Empfang wäre auch gegenüber einer ersten M-Erfassung festgestellt worden, die vor Einfahrt in den Tunnel aufgenommen wurde, und sich von der zweiten M-Erfassung nicht irregulär unterscheidet.

Diese Kombination von RE- und FE+ bedingt eine Entscheidung des Entscheidungsmittels EM zugunsten der fälligen Signalisierung der mangelnden Betriebsfähigkeit BF-. Das erste Signalisierungsmittel SM1 - die rote LED - wird mithin aktiviert, im Gegenzug wird das zweite Signalisierungsmittel SM2 deaktiviert.

Das Ausführungsbeispiel hat gezeigt, dass die Erfindung in einer Vielzahl von möglichen Umgebungs- und Ereigniskonstellationen funktioniert und daher ihren Zweck erfüllt, die mangelnde Betriebsfähigkeit einer Positionsbestimmungsvorrichtung, die sich aus dem Ausfall ihres GNSS-Empfängers ergibt, fahrzeugunabhängig anzuzeigen.

### Bezugszeichenliste:

- A: erster Ort/ Position A
- B: zweiter Ort/ Position B
- BF: Signalisierung einer Betriebsfähigkeit
- BM: Blockiermittel
- CP: Computerprogrammprodukt
- EHM: Erhebungsmittel
- EK1: erster elektrischer Kontakt
- EK2: zweiter elektrischer Kontakt
- EKM: Erkennungsmittel
- EM: Entscheidungsmittel
- FM: Feststellungsmittel
- FE: Feststellungsentscheidung
- GE: GNSS-Empfänger
- GES: Gebührenerhebungssystem
- GRD: Gebührenrelevante Daten
- GBD: Gebührendaten
- GHD: Guthabendaten
- KD: Kartendaten
- KV: Kommunikationsverbindung
- ME: Mobilfunkempfänger
- MG: Mobilfunkgerät
- PV: Positionsbestimmungsvorrichtung
- PZ: Prozessor
- RM: Registrierungsmittel
- RE: Registrierungsentscheidung
- SE: Signalisierungsentscheidung
- SP: Speicher
- SV: Signalisierungsvorrichtung
- SM1: erstes Signalisierungsmittel
- SM2: zweites Signalisierungsmittel
- SM3: drittes Signalisierungsmittel
- SM4: viertes Signalisierungsmittel
- T: Tunnelzelle
- VM: Vergleichsmittel
- W: Fahrweg
- Z: Mobilfunkzelle
- ZDV: zentrale Datenverarbeitungseinrichtung

## Patentansprüche

1. Positionsbestimmungsvorrichtung (PV), aufweisend
- wenigstens einen GNSS-Empfänger (GE),
- wenigstens eine Signalisierungsvorrichtung (SV) mit wenigstens einem ersten Signalisierungsmittel (SM1) zum Signalisieren einer mangelnden Betriebsfähigkeit des GNSS-Empfängers (GE),
- wenigstens einen Mobilfunkempfänger (ME),
**gekennzeichnet durch**
- wenigstens ein Entscheidungsmittel (EM) zum Entscheiden über eine Aktivierung des ersten Signalisierungsmittels (SM1) in Abhängigkeit von wenigstens einer Positionsbestimmungsqualität des GNSS-Empfangs des GNSS-Empfängers (GE) und in Abhängigkeit von einer ersten und wenigstens einer zweiten Mobilfunk-Empfangscharakteristik des Mobilfunk-Empfangs des Mobilfunkempfängers (ME).

2. Positionsbestimmungsvorrichtung (PV) nach Anspruch 1 **gekennzeichnet durch**
- wenigstens ein Registrierungsmittel (RM) zum Registrieren eines unzureichenden GNSS-Empfangs des GNSS-Empfängers (GE) in Abhängigkeit von der wenigstens einen Positionsbestimmungsqualität des GNSS-Empfangs des GNSS-Empfängers (GE), und
- wenigstens ein Feststellungsmittel (FM) zum Feststellen eines regulären Mobilfunk-Empfangs des Mobilfunk-empfängers (ME) in Abhängigkeit von der ersten und wenigstens der zweiten Mobilfunk-Empfangscharakteristik des Mobilfunk-Empfangs des Mobilfunkempfängers (ME),
wobei das Entscheidungsmittel (EM) zum Entscheiden über eine Aktivierung des ersten Signalisierungsmittels (SM1) in Abhängigkeit von dem Feststellungsergebnis des Feststellungsmittels (FM) und in Abhängigkeit von dem Registrierungsergebnis des Registrierungsmittels (RM) ausgebildet ist.

3. Positionsbestimmungsvorrichtung (PV) nach Anspruch 1 oder 2 **gekennzeichnet durch**
wenigstens ein Vergleichsmittel (VM) zum Ermitteln einer Änderung der Mobilfunk-Empfangscharakteristik **durch** Vergleich der ersten erfassten Mobilfunk-Empfangscharakteristik mit wenigstens der zweiten erfassten Mobilfunk-Empfangscharakteristik, wobei
das Feststellungsmittel (FM) ausgebildet ist, einen regulären Mobilfunk-Empfang festzustellen, wenn die vom Vergleichsmittel ermittelte Änderung der Mobilfunk-Empfangscharakteristik wenigstens ein vorgebbares Mobilfunk-Empfangskriterium für regulären Mobilfunk-Empfang erfüllt, und
wobei das Entscheidungsmittel (EM) zum Entscheiden über eine Aktivierung des ersten Signalisierungsmittels (SM1) bei Feststellung eines regulären Mobilfunk-Empfangs des Mobilfunkempfängers (ME) **durch** das Feststellungsmittel (FM) und der Registrierung eines unzureichenden GNSS-Empfangs des GNSS-Empfängers (GE) **durch** Registrierungsmittels (RM) ausgebildet ist.

4. Positionsbestimmungsvorrichtung (PV) nach einem der vorhergehenden Ansprüche **dadurch gekennzeichnet, dass** von den besagten Mitteln (RM, FM, EM, VM, BM) wenigstens das Entscheidungsmittel (EM) durch ein Computerprogrammprodukt (CP) in einem Speicher (SP) der Positionsbestimmungsvorrichtung (PV) repräsentiert ist, wobei das Computerprogrammprodukt (CP) mittels eines Prozessors (PZ) der Positionsbestimmungsvorrichtung (PV) ausführbar ist.

5. Verfahren zur Signalisierung einer mangelnden Betriebsfähigkeit (BF-) einer mit einem GNSS-Empfänger (GE) versehenen Positionsbestimmungsvorrichtung (PV) **gekennzeichnet durch**
- das Entscheiden über das Auslösen einer Signalisierung (BF-) in Abhängigkeit von wenigstens einer Positionsbestimmungsqualität des GNSS-Empfangs des GNSS-Empfängers (GE) und in Abhängigkeit von einer ersten und wenigstens einer zweiten Mobilfunk-Empfangscharakteristik des Mobilfunk-Empfangs eines von der Positionsbestimmungsvorrichtung umfassten Mobilfunkempfängers (ME).

6. Verfahren nach Anspruch 5 **gekennzeichnet durch**
- das Registrieren eines unzureichenden GNSS-Empfangs des GNSS-Empfängers (GE) in Abhängigkeit von wenigstens einer Positionsbestimmungsqualität des GNSS-Empfangs des GNSS-Empfängers (GE),
- das Feststellen eines regulären Mobilfunk-Empfangs in Abhängigkeit von der ersten und wenigstens der zweiten Mobilfunk-Empfangscharakteristik des Mobilfunk-Empfangs des Mobilfunkempfängers (ME) und
- das Entscheiden über das Auslösen einer Signalisierung (BF-) in Abhängigkeit von der Registrierung eines unzureichenden GNSS-Empfangs und in Abhängigkeit von der Feststellung eines regulären Mobilfunk-Empfangs.

7. Verfahren nach Anspruch 6 **dadurch gekennzeichnet, dass**
das Registrieren durch Vergleich von wenigstens einer erfassten Positionsbestimmungsqualität mit einem vorgebbaren GNSS-Qualitätskriterium erfolgt und/ oder
das Feststellen durch Vergleich von einer ersten und wenigstens einer zweiten erfassten Mobilfunk-Empfangscharakteristik mit wenigstens einem vorgebbaren Mobilfunk-Empfangskriterium erfolgt.

8. Verfahren nach einem der Ansprüche 5 bis 7 **dadurch gekennzeichnet, dass**
durch eine oder mehrere in zeitlichem Abstand aufeinander folgenden als G-Erfassungen bezeichneter Erfassungen der Positionsbestimmungsqualität des GNSS-Empfangs
(a) ein hinreichender GNSS-Empfang bei einer oder mehreren G-Erfassungen als positives Ergebnis RE+ registriert wird, falls die Positionsbestimmungsqualität einer oder mehrerer der G-Erfassungen wenigstens ein vorgebbares GNSS-Qualitätskriterium für hinreichenden GNSS-Empfang erfüllt, und
(b) ein unzureichender GNSS-Empfang bei einer oder mehreren G-Erfassungen als negatives Ergebnis RE- registriert wird, falls die Positionsbestimmungsqualität einer oder mehrerer der G-Erfassungen wenigstens ein vorgebbares GNSS-Qualitätskriterium für unzureichenden GNSS-Empfang erfüllt, wobei
in Abhängigkeit von dem Registrierungsergebnis RE+ oder RE- bezüglich des GNSS-Empfangs über eine Signalisierung der mangelnden Betriebsfähigkeit entschieden wird, wobei
anhand mehrerer in zeitlichem Abstand aufeinander folgenden als M-Erfassungen bezeichneten Erfassungen der Mobilfunk-Empfangscharakteristik des Mobilfunk-Empfangs eines von der Positionsbestimmungsvorrichtung umfassten Mobilfunkempfängers (ME)
(c) ein regulärer Mobilfunk-Empfang bei einer oder mehreren M-Erfassungen als positives Ergebnis FE+ festgestellt wird, falls die Mobilfunk-Empfangscharakteristik einer oder mehrerer M-Erfassungen wenigstens ein vorgebbares Mobilfunk-Empfangskriterium für regulären Mobilfunk-Empfang erfüllt, und
(d) ein irregulärer Mobilfunk-Empfang bei einer oder mehreren M-Erfassungen negatives Ergebnis FE- festgestellt wird, falls die Mobilfunk-Empfangscharakteristik einer oder mehrerer M-Erfassungen wenigstens ein vorgebbares Mobilfunk-Empfangskriterium für irregulären Mobilfunk-Empfang erfüllt, wobei auch in Abhängigkeit von dem Feststellungsergebnis FE+ oder FE- bezüglich des Mobilfunk-Empfangs über eine Signalisierung der mangelnden Betriebsfähigkeit entschieden wird, und zwar in der Weise, dass
(i) eine Signalisierung (BF-) ausgelöst wird, wenn das Registrierungsergebnis negativ (RE-) ist und das Feststellungsergebnis positiv (FE+) ist und
(ii) keine Signalisierung (BF+) für die übrigen Kombinationen von Registrierungs- und Feststellungsergebnis (RE+ und FE+, RE+ und FE-, RE- und FE-) ausgelöst wird.

9. Verfahren nach Anspruch 7 oder 8 **dadurch gekennzeichnet, dass**
ein Mobilfunk-Empfangskriterium die Änderung der Mobilfunk-Empfangscharakteristik im Vergleich wenigstens zweier M-Erfassungen spezifiziert,
von denen wenigstens eine erste einer registrierten G-Erfassungen von unzureichendem GNSS-Empfang zeitlich vorausgeht und wenigstens eine letzte der registrierten G-Erfassung von unzureichendem GNSS-Empfang zeitlich nachfolgt.

10. Verfahren nach einem der Ansprüche 1 bis 9 **dadurch gekennzeichnet, dass**
wenigstens eine der erfassten Mobilfunk-Empfangscharakteristiken eine erste Signalstärke eines ersten Kommunikationskanals und eine zweite Signalstärke wenigstens eines zweiten Kommunikationskanals umfasst.

11. Computerprogrammprodukt (CP) zur Signalisierung der mangelnden Betriebsfähigkeit einer mit einem GNSS-Empfänger (GE) und einer Signalisierungsvorrichtung (SV) versehenen Positionsbestimmungsvorrichtung (PV) **dadurch gekennzeichnet, dass**
das Computerprogrammprodukt (CP) Mittel zur Ausführung wenigstens einer Anweisung zum
- Entscheiden über das Auslösen einer Signalisierung (BF-) in Abhängigkeit von wenigstens einer Positionsbestimmungsqualität des GNSS-Empfangs des GNSS-Empfängers (GE) und in Abhängigkeit von einer ersten und wenigstens zweiten Mobilfunk-Empfangscharakteristik des Mobilfunk-Empfangs eines von der Positionsbestimmungsvorrichtung umfassten Mobilfunkempfängers (ME)
enthält oder verwendet.

12. Computerprogrammprodukt (CP) nach Anspruch 11 **dadurch gekennzeichnet, dass**
das Computerprogrammprodukt Mittel zur Ausführung wenigstens folgender Anweisungen enthält oder verwendet:
- Übernahme wenigstens einer als G-Erfassung bezeichneten Erfassung der Positionsbestimmungsqualität des GNSS-Empfangs des GNSS-Empfängers (GE),
- Erzeugung wenigstens einer binären Registrierungsentscheidung RE aus der Verarbeitung einer oder mehrerer G-Erfassungen mit dem Ergebnis 1 für hinreichenden GNSS-Empfang und dem Ergebnis 0 für unzureichenden GNSS-Empfang,
- Übernahme wenigstens einer ersten und wenigstens einer zweiten M-Erfassung der Mobilfunk-Empfangscharakteristik des Mobilfunkempfängers (ME),
- Erzeugung wenigstens einer binären Feststellungsentscheidung FE aus der Verarbeitung der ersten und wenigstens der zweiten M-Erfassung mit dem Ergebnis 1 für regulären Empfang und dem Ergebnis 0 für irregulären Empfang,
- Erzeugung und Ausgabe einer binären Signalisierungsentscheidung SE aus der Verarbeitung von einer oder mehrerer Registrierungsentscheidungen RE und einer oder mehrerer Feststellungsentscheidungen FE mit dem Ergebnis SE=0 für wenigstens eine Kombination von RE=0 und FE=1 und mit dem Ergebnis SE=1 sonst.

13. Gebührenerhebungsgerät (GEG) zur Erhebung von Gebühren für die Nutzung von auf ein Fahrzeug bezogenen Leistungen mit
- wenigstens einer Positionsbestimmungsvorrichtung (PV) nach einem der Ansprüche 1 bis 4 oder
- wenigstens einer Vorrichtung zur Durchführung wenigstens eines Verfahrens nach einem der Ansprüche 5 bis 9 oder
- wenigstens einer Vorrichtung mit wenigstens einem Computerprogrammprodukt nach Anspruch 10 oder 11,
**dadurch gekennzeichnet, dass**
- das Gebührenerhebungsgerät (GEG) einen mobilen Charakter besitzt, der dadurch gegeben ist, dass der GNSS-Empfänger (GE), der Mobilfunkempfänger (ME) und die Signalisierungsvorrichtung (SV) von einem gemeinsamen Gehäuse umfasst sind,
- das Gebührenerhebungsgerät (GEG) wenigstens ein Erkennungsmittel (EKM) zur Erkennung der Nutzung eines gebührenpflichtigen Verkehrsobjektes anhand der vom GNSS-Empfänger gelieferten Positionsinformationen umfasst sowie wenigstens ein Erhebungsmittel (EHM), das einem oder mehreren der vom Erkennungsmittel (EKM) erkannten gebührenpflichtigen Verkehrsobjekten wenigstens eine Gebühr zur Verbuchung zuordnet, wobei
- das Gebührenerhebungsgerät (GEG) zum Mitführen in einem gebührenpflichtigen Fahrzeug vorgesehen ist und einen fahrzeugunabhängigen Charakter besitzt, der dadurch gegeben ist, dass das Gebührenerhebungsgerät (GEG) keine Schnittstelle zur datentechnischen Einkopplung von Fahrdaten des Fahrzeugs in das Gebührenerhebungsgerät (GEG) aufweist.

14. Fahrzeug mit wenigstens einer Positionsbestimmungsvorrichtung nach einem der Ansprüche 1 bis 4 **dadurch gekennzeichnet, dass**
keine datentechnische Kommunikationsverbindung zwischen dem Fahrzeug und der Positionsbestimmungsvorrichtung und/ oder der fahrzeugseitigen Aufnahmevorrichtung besteht.

15. Verwendung eines mobilen fahrzeugunabhängigen Gebührenerhebungsgeräts (GEG) gemäß Anspruch 12 zur Erhebung von Gebühren in einem Gebührenerhebungssystem (GES), das
wenigstens eine zentrale Datenverarbeitungseinrichtung (ZDV) umfasst, die Guthabendaten (GHD) zur Übermittlung an ein Buchungsmittel im mobilen Gebührenerhebungsgerät (EHG) bereitstellt und/ oder von dem mobilen Gebührenerhebungsgerät (EHG) übermittelte Gebührendaten (GBD) entgegennimmt,
wobei die Übermittlung der Guthabendaten (GHD) und/ oder Gebührendaten (GBD) über eine mobile Kommunikationsverbindung erfolgt, die von einem den Mobilfunkempfänger (ME) umfassenden Mobilfunkgerät (MG) unterstützt wird.

## Claims

1. A position-determining device (PV), having
- at least one GNSS receiver (GE),
- at least one signalling device (SV) with at least one first signalling means (SM1) for signalling insufficient operational readiness of the GNSS receiver (GE),
- at least one mobile-telephony receiver (ME),
**characterised by**
- at least one decision means (EM) for deciding about an activation of the first signalling means (SM1) depending on at least one position-determining quality of the GNSS reception of the GNSS receiver (GE) and depending on a first and at least one second mobile-telephony reception characteristic of the mobile-telephony reception of the mobile-telephony receiver (ME).

2. The position-determining device (PV) according to claim 1, **characterised by**
- at least one registration means (RM) for registering an insufficient GNSS reception of the GNSS receiver (GE) depending on the at least one position-determining quality of the GNSS reception of the GNSS receiver (GE), and
- at least one detection means (FM) for detecting a regular mobile-telephony reception of the mobile-telephony receiver (ME) depending on the first and at least the second mobile-telephony reception characteristic of the mobile-telephony reception of the mobile-telephony receiver (ME),
wherein the decision means (EM) is designed for deciding about an activation of the first signalling means (SM1) depending on the detection result of the detection means (FM) and depending on the registration result of the registration means (RM).

3. The position-determining device (PV) according to claim 1 or 2, **characterised by**
at least one comparison means (VM) for determining a change of the mobile-telephony reception characteristic by comparing the first detected mobile-telephony reception characteristic with at least the second detected mobile-telephony reception characteristic, wherein
the detection means (FM) is designed to detect a regular mobile-telephony reception if the change of the mobile-telephony reception characteristic detected by the comparison means fulfils at least one predeterminable mobile-telephony reception criterion for regular mobile-telephony reception, and
wherein the decision means (EM) is designed for deciding about an activation of the first signalling means (SM1) in the event of the detection of a regular mobile-telephony reception of the mobile-telephony receiver (ME) by the detection means (FM) and the registration of an insufficient GNSS reception of the GNSS receiver (GE) by registration means (RM).

4. The position-determining device (PV) according to one of the preceding claims, **characterised in that** of the said means (RM, FM, EM, VM, BM), at least the decision means (EM) is represented by a computer program product (CP) in a storage device (SP) of the position-determining device (PV), wherein the computer program product (CP) can be executed by means of a processor (PZ) of the position-determining device (PV).

5. A method for signalling insufficient operational readiness (BF-) of a position-determining device (PV) provided with a GNSS receiver (GE), **characterised by**
- deciding about the triggering of signalling (BF-) depending on at least one position-determining quality of the GNSS reception of the GNSS receiver (GE) and depending on a first and at least one second mobile-telephony reception characteristic of the mobile-telephony reception of a mobile-telephony receiver (ME) comprised by the position-determining device.

6. The method according to claim 5, **characterised by**
- registering an insufficient GNSS reception of the GNSS receiver (GE) depending on at least one position-determining quality of the GNSS reception of the GNSS receiver (GE),
- detecting a regular mobile-telephony reception depending on the first and at least the second mobile-telephony reception characteristic of the mobile-telephony reception of the mobile-telephony receiver (ME), and
- deciding about the triggering of signalling (BF-) depending on the registration of an insufficient GNSS reception and depending on the detection of a regular mobile-telephony reception.

7. The method according to claim 6, **characterised in that**
the registration takes place by comparing at least one detected position-determining quality with a predeterminable GNSS quality criterion and/or
the detection takes place by comparing a first and at least one second detected mobile-telephony reception characteristic with at least one predeterminable mobile-telephony reception criterion.

8. The method according to any one of claims 5 to 7, **characterised in that**
by means of one or a plurality of detections of the position-determining quality of the GNSS reception, which is/are termed G detections and follow one another with temporal spacing,
(a) a satisfactory GNSS reception in the case of one or a plurality of G detections is registered as a positive result RE+, in the event that the position-determining quality of one or a plurality of the G detections fulfils at least one predeterminable GNSS quality criterion for satisfactory GNSS reception, and
(b) an insufficient GNSS reception in the case of one or a plurality of G detections is registered as a negafive result RE-, in the event that the position-determining quality of one or a plurality of the G detections fulfils at least one predeterminable GNSS quality criterion for insufficient GNSS reception, wherein
a decision is made about a signalling of the insufficient operational readiness, depending on the registration result RE+ or RE-with respect to the GNSS reception, wherein
on the basis of a plurality of detections of the mobile-telephony reception characteristic of the mobile-telephony reception of a mobile-telephony receiver (ME) comprised by the position-determining device, which detections are termed M detections and follow one another with temporal spacing,
(c) a regular mobile-telephony reception in the case of one or a plurality of M detections is detected as a positive result FE+, in the event that the mobile-telephony reception characteristic of one or a plurality of M detections fulfils at least one predeterminable mobile-telephony reception criterion for regular mobile-telephony reception, and
(d) an irregular mobile-telephony reception in the case of one or a plurality of M detections is detected as a negative result FE-, in the event that the mobile-telephony reception characteristic of one or a plurality of M detections fulfils at least one predeterminable mobile-telephony reception criterion for irregular mobile-telephony reception, wherein
a decision is also made about a signalling of the insufficient operational readiness, depending on the detection result FE+ or FE-with respect to the mobile-telephony reception, specifically in such a manner that
(i) signalling (BF-) is triggered if the registration result is negative (RE-) and the detection result is positive (FE+) and
(ii) no signalling (BF+) is triggered for the remaining combinations of registration and detection results (RE+ and FE+, RE+ and FE-, RE- and FE-).

9. The method according to claim 7 or 8, **characterised in that**
a mobile-telephony reception criterion specifies the change of the mobile-telephony reception characteristic in a comparison of at least two M detections,
of which at least one first one temporally precedes registered G detections of insufficient GNSS reception and at least one last one temporally follows the registered G detection of insufficient GNSS reception.

10. The method according to any one of claims 1 to 9, **characterised in that**
at least one of the detected mobile-telephony reception characteristics comprises a first signal strength of a first communication channel and a second signal strength of at least one second communication channel.

11. A computer program product (CP) for signalling the insufficient operational readiness of a position-detecting device (PV) provided with a GNSS receiver (GE) and a signalling device (SV)
**characterised in that**
the computer program product (CP) contains or uses means for executing at least one instruction for
- deciding about the triggering of signalling (BF-) depending on at least one position-determining quality of the GNSS reception of the GNSS receiver (GE) and depending on a first and at least second mobile-telephony reception characteristic of the mobile-telephony reception of a mobile-telephony receiver (ME) comprised by the position-determining device.

12. The computer program product (CP) according to claim 11, **characterised in that**
the computer program product (CP) contains or uses means for executing at least the following instructions:
- accepting at least one detection, termed G detection, of the position-determining quality of the GNSS reception of the GNSS receiver (GE),
- generating at least one binary registration decision RE from the processing of one or a plurality of G detections with the result 1 for satisfactory GNSS reception and the result 0 for insufficient GNSS reception,
- accepting at least one first and at least one second M detection of the mobile-telephony reception characterisfic of the mobile-telephony receiver (ME),
- generating at least one binary detection decision FE from the processing of the first and at least the second M detection with the result 1 for regular reception and the result 0 for irregular reception,
- generating and emitting a binary signalling decision SE from the processing of one or a plurality of registration decisions RE and one or a plurality of detection decisions FE with the result SE=0 for at least one combination of RE=0 and FE=1 and with the result SE=1 otherwise.

13. A fee charging device (GEG) for charging fees for the use of services relating to a vehicle, with
- at least one position-determining device (PV) according to one of claims 1 to 4, or
- at least one device for carrying out at least one method according to one of claims 5 to 9, or
- at least one device with at least one computer program product according to claim 10 or 11,
**characterised in that**
- the fee charging device (GEG) has a mobile character, which is determined by the fact that the GNSS receiver (GE), the mobile-telephony receiver (ME) and the signalling device (SV) are enclosed by a common housing,
- the fee charging device (GEG) comprises at least one recognition means (EDM) for recognising the use of a traffic object subject to fee on the basis of the position information delivered by the GNSS receiver, and also a charging means (EHM), which assigns at least one charge for booking to one or a plurality of the traffic objects subject to fee recognised by the recognition means (EKM), wherein
- the fee charging device (GEG) is provided for being carryied within a chargeable vehicle subject to fee and has a vehicle-independent character, which is determined by the fact that the charging device (GEG) does not have an interface for data coupling of journey data of the vehicle into the charging device (GEG).

14. A vehicle with at least one position-determining device according to one of claims 1 to 4, **characterised in that** there is no data communication connection between the vehicle and the position-determining device and/or the vehicle-side mounting device.

15. A use of a mobile vehicle-independent fee charging device (GEG) according to claim 12 for charging fees in a fee charging system (GES), which
comprises at least one central data processing apparatus (ZDV), which provides credit data (GHD) for transmission to a booking means in the mobile fee charging device (EHG) and/or accepts fee data (GBD) transmitted by the mobile fee charging device (EHG),
wherein the transmission of the credit data (GHD) and/or fee data (GBD) takes place via a mobile communication connection, which is supported by a mobile-telephony device (MG) comprising the mobile-telephony receiver (ME).

## Revendications

1. Dispositif de détermination de position (PV), présentant
- au moins un récepteur GNSS (GE),
- au moins un dispositif de signalisation (SV) avec au moins un premier moyen de signalisation (SM1) pour signaler une capacité de fonctionnement insuffisante du récepteur GNSS (GE),
- au moins un récepteur de radiocommunication mobile (ME),
**caractérisé par**
- au moins un moyen de décision (EM) pour décider d'une activation du premier moyen de signalisation (SM1) en fonction d'au moins une qualité de détermination de position de la réception GNSS du récepteur GNSS (GE) et en fonction d'une première et au moins d'une deuxième caractéristique de réception de radiocommunication mobile de la réception de radiocommunication mobile du récepteur de radiocommunication mobile (ME).

2. Dispositif de détermination de position (PV) selon la revendication 1, **caractérisé par**
- au moins un moyen d'enregistrement (RM) pour l'enregistrement d'une réception GNSS insuffisante du récepteur GNSS (GE) en fonction de l'au moins une qualité de détermination de position de la réception GNSS du récepteur GNSS (GE), et
- au moins un moyen de constatation (FM) pour constater une réception de radiocommunication mobile régulière du récepteur de radiocommunication mobile (ME) en fonction de la première et au moins de la deuxième caractéristique de réception de radiocommunication mobile de la réception de radiocommunication mobile du récepteur de radiocommunication mobile (ME),
le moyen de décision (EM) étant réalisé pour la décision d'une activation du premier moyen de signalisation (SM1) en fonction du résultat de constatation du moyen de constatation (FM) et en fonction du résultat d'enregistrement du moyen d'enregistrement (RM).

3. Dispositif de détermination de position (PV) selon les revendications 1 ou 2, **caractérisé par**
au moins un moyen de comparaison (VM) pour déterminer une modification de la caractéristique de réception de la radiocommunication mobile en comparant la première caractéristique de réception de radiocommunication mobile détectée avec au moins la deuxième caractéristique de réception de radiocommunication mobile détectée,
le moyen de constatation (FM) étant réalisé pour constater une réception de radiocommunication mobile régulière lorsque la modification, déterminée par la moyen de comparaison, de ia caractéristique de réception de la radiocommunication mobile satisfait à au moins un critère de réception de radiocommunication mobile prescriptible pour une réception de radiocommunication mobile régulière, et
le moyen de décision (EM) étant réalisé pour décider d'une activation du premier moyen de signalisation (SM1) lors du constat d'une réception de radiocommunication mobile régulière du récepteur de radiocommunication mobile (ME) grâce au moyen de constatation (FM) et pour l'enregistrement d'une réception GNSS insuffisante du récepteur GNSS (GE) grâce aux moyens d'enregistrement (RM).

4. Dispositif de détermination de position (PV) selon l'une des revendications précédentes, **caractérisé en ce que**,
parmi lesdits moyens (RM, FM, EM, VM, BM), au moins le moyen de décision (EM) est représenté par un produit de programme informatique (CP) dans une mémoire (SP) du dispositif de détermination de position (PV), le produit de programme informatique (CP) pouvant être exécuté à l'aide d'un processeur (PZ) du dispositif de détermination de position (PV).

5. Procédé pour la signalisation d'une capacité de fonctionnement insuffisante (BF-) d'un dispositif de détermination de position (PV) équipé d'un récepteur GNSS (GE), **caractérisé par**
- la décision du déclenchement d'une signalisation (BF-) en fonction d'au moins une qualité de détermination de position de la réception GNSS du récepteur GNSS (GE) et en fonction d'une première et au moins d'une deuxième caractéristique de réception de radiocommunication mobile de la réception de radiocommunication mobile d'un récepteur de radiocommunication mobile (ME) compris dans le dispositif de détermination de position.

6. Procédé selon la revendication 5, **caractérisé par**
- l'enregistrement d'une réception GNSS insuffisante du récepteur GNSS (GE) en fonction d'au moins une qualité de détermination de position de la réception GNSS du récepteur GNSS (GE),
- la constatation d'une réception de radiocommunication mobile régulière en fonction de la première et au moins de la deuxième caractéristique de réception de radiocommunication mobile de la réception de radiocommunication mobile du récepteur de radiocommunication mobile (ME) et
- la décision concernant le déclenchement d'une signalisation (BF-) en fonction de l'enregistrement d'une réception GNSS insuffisante et en fonction du constat d'une réception de radiocommunication mobile régulière.

7. Procédé selon la revendication 6, **caractérisé en ce que**
l'enregistrement s'effectue en comparant au moins une qualité de détermination de position détectée avec un critère de qualité GNSS prescriptible et/ou
**en ce que** la constatation s'effectue en comparant une première et au moins une deuxième caractéristique de réception de radiocommunication mobile détectée avec au moins un critère de réception de radiocommunication mobile prescriptible.

8. Procédé selon l'une des revendications 5 à 7, **caractérisé en ce que**,
grâce à une ou plusieurs détections, désignées en tant que détections G, qui se succèdent les unes les autres à intervalles dans le temps, de la qualité de détermination de position de la réception GNSS on enregistre
(a) une réception GNSS suffisante lors d'une ou plusieurs détections G en tant que résultat positif RE+ si la qualité de détermination de position d'une ou plusieurs détections G satisfait à au moins un critère de qualité GNSS prescriptible pour une réception GNSS suffisante, et
(b) une réception GNSS insuffisante lors d'une ou plusieurs détections G étant enregistrée en tant que résultat négatif RE-si la qualité de détermination de position d'une ou plusieurs détections G satisfait à au moins un critère de qualité GNSS prescriptible pour une réception GNSS insuffisante, dans lequel
on décide, en fonction du résultat d'enregistrement RE+ ou RE- concernant la réception GNSS, d'une signalisation de la capacité de fonctionnement insuffisante, dans lequel
à l'aide de plusieurs détections, désignées comme étant des détections M, qui se succèdent les unes les autres à intervalles dans le temps, de la caractéristique de réception de radiocommunication mobile de la réception de radiocommunication mobile d'un récepteur de radiocommunication mobile (ME) compris par le dispositif de détermination de position, on constate
(c) une réception de radiocommunication mobile régulière lors d'une ou plusieurs détections M comme étant un résultat positif FE+ si la caractéristique de réception de radiocommunication mobile d'une ou plusieurs détections M satisfait à au moins un critère de réception de radiocommunication mobile prescriptible pour une réception de radiocommunication mobile régulière, et
(d) une réception de radiocommunication mobile irrégulière lors d'une ou plusieurs détections M étant constatée en tant que résultat négatif FE- si la caractéristique de réception de radiocommunication mobile d'une ou plusieurs détections M satisfait à au moins un critère de réception de radiocommunication mobile prescriptible pour une réception de radiocommunication mobile irrégulière, dans lequel
on décide, également en fonction du résultat de constatation FE+ ou FE- concernant la réception de la radiocommunication mobile, d'une signalisation de la capacité de fonctionnement insuffisante, et ce, de manière
(i) à déclencher une signalisation (BF-) si le résultat d'enregistrement est négatif (RE-) et que le résultat de constatation est positif (FE+) et
(ii) à ne pas déclencher de signalisation (BF+) pour les autres combinaisons de résultats d'enregistrement et de constatation (RE+ et FE+, RE+ et FE-, RE- et FE-).

9. Procédé selon les revendications 7 ou 8, **caractérisé en ce que**
un critère de réception de radiocommunication mobile spécifie la modification de la caractéristique de réception de radiocommunication mobile lors de la comparaison d'au moins deux détections M,
au moins une première d'entre elles précédant dans le temps une détection G enregistrée d'une réception GNSS insuffisante et au moins une dernière suivant dans le temps la détection G enregistrée d'une réception GNSS insuffisante.

10. Procédé selon l'une des revendications 1 à 9, **caractérisé en ce que**
au moins l'une des caractéristiques de réception de radiocommunication mobile comprend une première intensité de signal d'un premier canal de communication et une deuxième intensité de signal d'un deuxième canal de communication.

11. Produit de programme informatique (CP) pour signaler la capacité de fonctionnement insuffisante d'un dispositif de détermination de position (PV) muni d'un récepteur GNSS (GE) et d'un dispositif de signalisation (SV),
**caractérisé en ce que**
le produit de programme informatique (CP) comprend ou utilise des moyens pour exécuter au moins une instruction pour
d écider du déclenchement d'une signalisation (BF-) en fonction d'au moins une qualité de détermination de position de la réception GNSS du récepteur GNSS (GE) et en fonction d'une première et au moins d'une deuxième caractéristique de réception de radiocommunication mobile de la réception de radiocommunication mobile d'un récepteur de radiocommunication mobile (ME) compris par le dispositif de détermination de position.

12. Produit de programme informatique (CP) selon la revendication 11, **caractérisé en ce que**
le produit de programme informatique comprend ou utilise des moyens pour exécuter au moins les instructions suivantes :
- prise en compte d'au moins une détection, désignée comme étant une détection G, de la qualité de détermination de position de la réception GNSS du récepteur GNSS (GE),
- génération d'au moins une décision d'enregistrement binaire RE à partir du traitement d'une ou plusieurs détections G avec le résultat 1 pour une réception GNSS suffisante et le résultat 0 pour une réception GNSS insuffisante,
- prise en compte d'au moins une première et d'au moins une deuxième détection M de la caractéristique de réception de radiocommunication mobile du récepteur de radiocommunication mobile (ME),
- génération d'au moins une décision de constatation binaire FE à partir du traitement de la première et au moins de la deuxième détection M avec le résultat 1 pour une réception régulière et le résultat 0 pour une réception irrégulière,
- génération et sortie d'une décision de signalisation binaire SE à partir du traitement d'une ou plusieurs décisions d'enregistrement RE et d'une ou plusieurs décisions de constatation FE avec le résultat SE=0 pour au moins une combinaison de RE=0 et FE=1 et sinon, avec le résultat SE=1.

13. Appareil de perception de redevances (GEG) pour percevoir des redevances pour l'utilisation de prestations concernant un véhicule, avec
- au moins un dispositif de détermination de position (PV) selon l'une des revendications 1 à 4 ou
- au moins un dispositif pour la mise en oeuvre d'au moins un procédé selon l'une des revendications 5 à 9 ou
- au moins un dispositif avec au moins un produit de programme informatique selon les revendications 10 ou 11,
**caractérisé en ce que**
- l'appareil de perception de redevances (GEG) possède un caractère mobile, lequel résulte du fait que le récepteur GNSS (GE), le récepteur de radiocommunication mobile (ME) et le dispositif de signalisation (SV) sont inclus dans un boîtier commun,
- l'appareil de perception de redevances (GEG) comprenant au moins un moyen de reconnaissance (EKM) pour reconnaître l'utilisation d'un objet de circulation tenu de s'acquitter d'une redevance à l'aide des informations de position délivrées par le récepteur GNSS ainsi qu'au moins un moyen de perception (EHM), lequel associe à un ou plusieurs objets infrastructurels soumis à une redevance reconnus par le moyen de reconnaissance (EKM) au moins une redevance à comptabiliser,
- l'appareil de perception de redevances (GEG) étant prévu pour être embarqué dans un véhicule soumis à une redevance et possède un caractère indépendant du véhicule, lequel résulte du fait que l'appareil de perception de redevances (GEG) ne présente aucune interface pour une injection de technique des données de données de circulation du véhicule dans l'appareil de perception de redevances (GEG).

14. Véhicule avec au moins un dispositif de détermination de position selon l'une des revendications 1 à 4, **caractérisé en ce qu'**il n'y a aucune liaison de communication de technique des données entre le véhicule et le dispositif de détermination de position et/ou le dispositif de réception côté véhicule.

15. Utilisation d'un appareil de perception de redevances (GEG) mobile indépendant du véhicule selon la revendication 12 pour la perception de redevances dans un système de perception de redevances (GES), lequel
comprend au moins un dispositif de traitement de données centralisé (ZDV), lequel met à disposition des données de crédit (GHD) pour la transmission à un moyen de comptabilisation dans l'appareil de perception de redevances (EHG) mobile et/ou réceptionne des données de redevance (GBD) transmises par l'appareil de perception de redevances (EHG) mobile,
dans laquelle la transmission des données de crédit (GHD) et/ou des données de redevance (GBD) s'effectue via une liaison de communication mobile, laquelle est supportée par un appareil de radiocommunication mobile comprenant le récepteur de radiocommunication mobile (ME).
